# EUROPEAN PATENT APPLICATION

(11) **EP 2 618 293 A2**
(43) Date of publication of application: **24.07.2013**
(21) Application number: 12199485.9
(22) Date of filing: 27.12.2012
(51) Int. Cl.: G06Q 10/00

(54) **Feature licensing framework for third party feature credit management**

(30) Priority: 18.01.2012 US 201213353309
(71) Applicant: General instrument Corporation, Horsham PA 19044 (US)
(72) Inventor: Zheng, Jinsong, San Diego, CA California 92130 (US); Chan, Tat Keung, San Diego, CA California 92131 (US); Prickett, David B., San Diego, CA California 92110 (US); Qiu, Xin, San Diego, CA California 92128 (US)
(74) Representative: Openshaw, Paul Malcolm

(57) **Abstract**

A method and apparatus is provided for provisioning devices with upgraded feature licenses that enable specified upgraded features in the devices. The method includes authenticating a first customer as an authenticated user and receiving from a first customer a first request to establish a credit record for a specified number of upgraded feature licenses. The upgraded feature licenses are obtainable from a third party supplier and are associated with components available from the third party supplier. The credit record includes feature credits to be made available to the first customer to obtain the upgraded feature licenses from the third party supplier. A second request is received from the first customer to release the feature credits to a credit pool associated with the first customer so that the feature credits are available to the first customer. The upgraded feature licenses are generated and the credit pool associated with the first customer is debited for the number of credits needed to obtain the upgraded feature licenses.

## Description

### Background

As technologies advance rapidly, manufacturers are adding an increasingly large number of features to their products. Since customer needs vary over a wide range and constantly evolve, it is necessary for manufacturers to implement systems that can handle the customization of features for the initial configuration of and the subsequent changes in the product feature set. For example, a manufacturer of mobile phones such as Motorola, for instance, may offer mobile phones that are capable of supporting a number of features in addition to voice such as data, texting, GPS services, Wi-Fi connectivity, web browsing, text-to speech and so on. The direct customers of the manufacturer, who in the case of mobile phones are often service providers such as Verizon and ATT, for instance, may wish to obtain mobile phones with different combinations of these features in order to meet the varying needs of the end users.

To address this issue, manufacturers have turned to feature licensing, which provides a feature control mechanism that allows customers to obtain a license to enable only the product features that meet their specific needs. Feature licensing brings many benefits to both manufacturers and customers. For example, feature licensing allows manufacturers to have a single build of a product that incorporates all available features and rely on feature licensing to enable different combinations of features. In addition, customers can get the exact features for a product that meets their specific needs without having to pay for undesired features. Feature licensing also allows manufacturers and customers to manage product upgrades and downgrades through license changes, eliminating the need to deploy different product versions and reducing operational downtime.

To achieve such benefits, however, different manufacturers, and even different organizations within the same manufacturer, have tended to build their own feature licensing systems to support their own product lines. These systems are often designed with only one or a few similar product lines in mind, and consequently cannot be easily extended to support other product lines. Once such custom-designed systems are developed, they need to be individually maintained and supported. Such repeated efforts result in increased cost in product development, deployment and support.

On the customer side, end users may have to use multiple feature licensing systems if they have products from multiple manufacturers. Different user interfaces and processes in different feature licensing systems for similar tasks can cause confusion in users, which leads to the need for increased user training and support efforts.

### Brief Description of the Drawings

FIG. 1 shows the logical architecture of one implementation of a feature licensing system.

FIG. 2 illustrates the logical relationship among products, product lines, features and feature rules.

FIG. 3 shows an example of a user interface provided by the feature license management module.

FIG. 4 shows an illustrative user interface through which the user can download in a batch mode the licenses requested through the user interface shown in FIG. 3.

FIG. 5 illustrates the transition in a license's status from one category (e.g., "Active," "Replaced," "Revoked with Confirmation," and "Revoked without Confirmation") to another.

FIG. 6 shows a role-entity permission table that is used to assign roles to users.

FIG. 7 shows a license generation request processor and a generic license generator, which are associated with the feature license management module of FIG. 1.

FIG. 8 shows the information flow of sales order information into the feature licensing system.

FIG. 9 shows a user interface presenting a sales order that is undergoing review.

FIG. 10 shows the user interface of FIG. 9 when a change to a sales order is being made.

FIG. 11 shows the manner in which feature credit records are generally associated with customer organization units, which are arranged in a configurable hierarchical structure.

FIG. 12 is a process flow illustrating one example of a process of establishing the inventory of feature upgrade licenses obtained from a third party supplier.

FIG. 13 is a process flow illustrating one example of a process involving a customer's purchase of feature upgrades from the manufacturer.

FIG. 14 is a process flow illustrating one example of a process for upgrading features during the manufacturing process.

FIG. 15 is a process flow illustrating one example of a process by which a customer returns a device having an upgrade feature license.

FIG. 16 is a process flow illustrating one example of a process by which a customer receives a replacement device with an upgrade license generated using feature credits lent from a lender in advance of returning a device having an upgrade feature license.

FIG. 17 is a process flow illustrating one example of a process by which a customer returns a device having an upgrade feature license to the factory for which a replacement has been provided in advance with an upgrade feature license generated using credits lent from the manufacturer.

FIG. 18 is a process flow illustrating one example of a process by which a customer returns a device having an upgrade feature license to a third party credit-stocking contractor for which a replacement has been provided in advance with an upgrade feature license generated using credits lent from the contractor.

FIG. 19 shows a process for tracking credits for the advance replacement of a device by the factory or a third party contractor without lending credits to the customer.

FIG. 20 shows an example of a process performed by the feature license system when a customer returns a device for which an advanced replacement has been provided without loaning any credits.

FIG. 21 is a flowchart showing one example of how a customer can provision one or more devices with feature licenses using the feature license system described above.

FIG. 22 shows an example of a product device on which resides a device license module, which serves as an interface through which product devices can perform tasks related to feature licenses.

FIG. 23 shows a user interface that may be used to create a credit record.

FIG. 24 shows a user interface that may be used to remove the hold and activate the credits.

FIG. 25 shows a summary of the credits that have been made available, which may be presented by the feature licensing system.

FIGs. 26-31 show user interfaces that may be provided by the system which a contractor may use to transfer the returned device from a customer to the contractor.

### Summary

In accordance with one aspect of the invention, a system is provided for provisioning devices with upgraded feature licenses that enable specified features to be upgraded in the devices. The features are licensed from third party suppliers of at least one component used in the devices. The system includes a feature definition module, a feature license management module, a feature credit management module, a user management module and a user interface. The feature definition module is configured to store product feature information associated with different products available from a plurality of different manufacturers. At least two of the different products belong to different product lines and support different sets of features. The feature license management module configured to generate, update, upgrade and revoke feature licenses associated with the different products, including upgraded features licenses associated with the components available from the third party suppliers. The feature licenses that are generated all have a common format. The feature credit management module configured to monitor and account for feature credits available to manufacturer and customer organization units in manufacturer and customer feature credit pools, respectively. The feature credits represent a quantity of a feature that is available to the respective manufacturer or customer organization unit. The user management module is configured to authenticate users of the system. The user interface is accessible over a communications network through which authenticated users can request and receive feature licenses, including the upgraded feature licenses.

In accordance with another aspect of the invention, a method is provided for provisioning devices with upgraded feature licenses that enable specified upgraded features in the devices. The method includes authenticating a first customer as an authenticated user and receiving from a first customer over a communications network a first request to establish a credit record for a specified number of upgraded feature licenses. The upgraded feature licenses are obtainable from a third party supplier and are associated with components available from the third party supplier. The credit record includes feature credits to be made available to the first customer to obtain the upgraded feature licenses from the third party supplier. A second request is received from the first customer to release the feature credits in the credit record to a credit pool associated with the first customer so that the feature credits are available to the first customer to obtain the upgraded feature licenses. The upgraded feature licenses are generated and the credit pool associated with the first customer is debited for a number of credits needed to obtain the upgraded feature licenses.

### Detailed description

### Definitions

As used herein, the term Generic Product refers to a product that uses the generic feature license format.

As used herein, the term Non-generic Product refers to a product that does not use the generic feature license format.

As used herein, the term Feature Qualifier Type refers to one of Boolean type and Integer type.

The term Feature Qualifier Value refers to a Boolean value that indicates whether a feature is enabled, or a positive integer value that specifies the capacity of a feature (e.g. the number of high-definition channels).

The term Feature Value Limitation refers to a list or a range of valid feature qualifier values.

As used herein, the term Feature Type refers to the temporal attribute of a feature and is one of perpetual, subscription and trial.

The term Feature Dependency refers to the dependencies among multiple features, either due to business rules or hardware limitations. For example, in a product with features A, B and C, feature B and C can only be enabled if feature A is enabled; and feature C cannot have a quantity more than 8 if feature B has a quantity more than 4.

The term Feature Credit refers to an available quantity of a feature.

As used herein, the term Feature Credit Record refers to a record that contains the original feature credit established by a feature purchase and the remaining feature credit after a certain quantity of the feature is used. A feature credit record also contains information regarding the organization unit it belongs to.

As used herein, the term Device refers to a physical unit of a product. For a software product, a device is a computer that runs the software.

The term Device ID refers to a unique identifier of a device. If a device does not have an ID, or its ID is not considered secure enough to be used for feature licensing, the device ID may be provided by an expansion module, such as a secure USB token.

The term Secure Device ID refers to a device ID that is not easily modifiable or falsifiable. The threshold of "easily modifiable or falsifiable" is established by manufacturers according to the value of the features in a product.

As used herein, the term Secure Storage refers to a persistent non-volatile memory in a device which is not easily modifiable. The threshold of "easily modifiable" is established by manufacturers according to the value of the features in a product.

As used herein, the term Private Key refers to the private key in an asymmetric cryptographic key pair that is usually used for generating a digital signature for a piece of data.

As used herein, the term Feature Credit Pool (or simply Credit Pool) refers to a pool of feature credits in all the feature credit records owned by an organization unit.

### System Overview

To reduce the cost of developing, maintaining and supporting feature licensing systems, as well as the cost of implementing feature license enforcement mechanism in products, a generic feature licensing system can be provided that can support different product lines, which may include product lines from multiple manufacturers and not just from a single manufacturer. Such a generic feature licensing system may be operated and supported by a third party. Users of such a system may include users associated with the manufacturers, operators of the system who support and maintain the system, and customers who will be using the various features of a product for which licenses are being obtained. Customers may include, by way of example, service providers and/or the consumer end user.

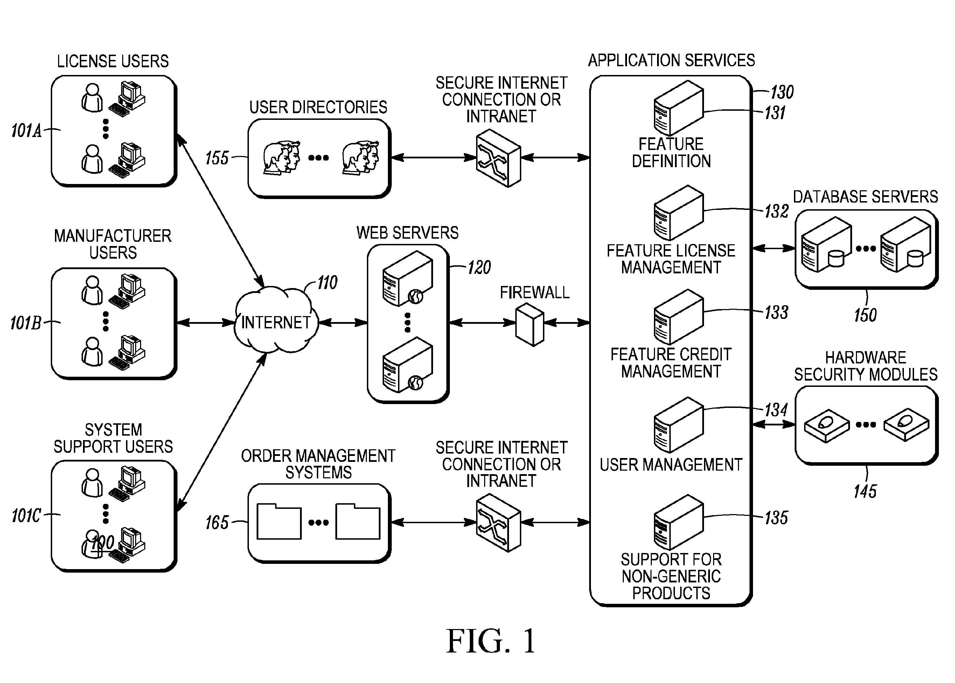

Turning now to the figures, FIG. 1 shows the logical architecture of one implementation of a feature licensing system. In this example three categories of users are user's 101A-101C (collectively, 101). Users 101A are license users who are representative customers of the feature licensing system such as service providers who obtain products from their respective manufacturers on behalf of end users. Alternatively, the customers may be the end users themselves. Users 101B are manufacturer users who are representative of the manufacturers of the products for which feature licenses are being provided. Users 101C are system support users who are internal system administrative users who belong to the hosting organization that operates and maintains the licensing system. Certain advanced administrative functions may be limited to LAN access only and may not be exposed to a public network.

The users 101 communicate with the system over the Internet 110 or any other packet-based wide area network. In this example the users access and interact with the system through one or more web servers 120, which provides a single front-end interface that is accessed by a client-based application such as a conventional web browser.

The feature licensing system typically includes one or more physical server computers with one or more physical storage devices and databases as well as various processing engines. In particular, in the example shown in FIG. 1 the feature licensing system includes one or more service components 130 that typically reside on application servers which execute one or more applications that provide various feature licensing services to the clients 101. In FIG. 1 five logical service components or modules are shown: a feature definition component 131, a feature license management component 132, a feature credit management component 133, a user management component 134 and a non-generic product support module 135.

The feature licensing system also includes hardware security modules (HSMs) 145 in which cryptographic keys used to protect licenses may be stored for use by the system. The feature licensing system also contains a database 150 of records. These records may pertain to issued licenses, original requests for new licenses, audit data, control policy information, organization information, project configurations, account relationships, product configurations, user information, and other record types as necessary. The service components have access to user directories 155, which may be the internal enterprise user directories that belong to the various users. The service components also have access to order management systems 165, where sales orders for product features are maintained.

At a high level, the modules that make up the service component 130 provide the following functions and services. The feature definition module 131 stores the product feature information associated with the various product lines of the manufacturers who are supported by the feature licensing system. This module is structured so that it is generic enough to support commonalities among various feature licensing needs. At the same time it is extensible enough to be able to accommodate any peculiarities in the feature specification of certain product lines.

The feature license management module 132 supports routine feature license management tasks such as license generation, updates, enforcement and revocation. This module should be able to carry out such tasks in a generic manner so that it can be shared among different product lines. In addition, because the scale of deployment and the update schedule can vary widely across different product lines, in some implementations the management tasks should support a batch mode of operation.

The feature credit management module 133 obtains feature credit information from customer sales order systems, which manage feature sales orders for the respective customers. This module keeps track of any change in feature credits so that they are accurately accounted for during credit creation and adjustment, as well as license generation, update and revocation.

The user management module 134 integrates with existing user directories of the various users so that the system can be accessed using a single sign-on interface and avoid duplicating user information. This module also manages user privileges so that they are properly authorized to perform certain tasks while being prohibited from performing other task.

The non-generic product support module 135 allows legacy products that may be too difficult to migrate to the generic framework to nevertheless be integrated into the feature licensing system. Likewise, certain new products, which for various reasons may not be able to use the generic license format, can also be supported by the feature licensing system.

The licensing system is flexible in its support for products with different levels of computing capabilities, device ID modifiability and storage security, as well as for different needs of license portability.

Another module associated with the system is a device license module, which is located on the product devices. The device license module is responsible for all feature license related operations, such as license validation, feature attribute value reporting, license revocation confirmation generation, etc. It is integrated into product software, which communicates with the module through a programming interface.

### FEATURE DEFINITION MODULE

The feature definition module 131 stores product feature information that is used for the purpose of feature licensing. This module will typically be used by product team members on behalf of the manufacturer (e.g., by employees of the manufacturer). The feature information that is provided for each product line associated with a manufacturer is composed of the following elements: the product line, the products within that product line, the features associated with that product line, a feature rule set and a default feature rule set.

The product line is specified by a product line name and a description. Each product in a product line includes a product name and description, the name and type of a license signature key (which is stored in an HSM), and a device ID preload flag (which indicates whether device IDs need to be preloaded into the feature licensing system before any license can be generated). Each feature includes a feature ID as defined for a product, a feature part number as defined in a sales order system, a feature name and description, a feature qualifier type, a feature type, and a feature value limitation. A feature rule set specifies feature dependencies within a product. A default feature set specifies the features that make up the essential feature set of a product, and their corresponding feature qualifier values.

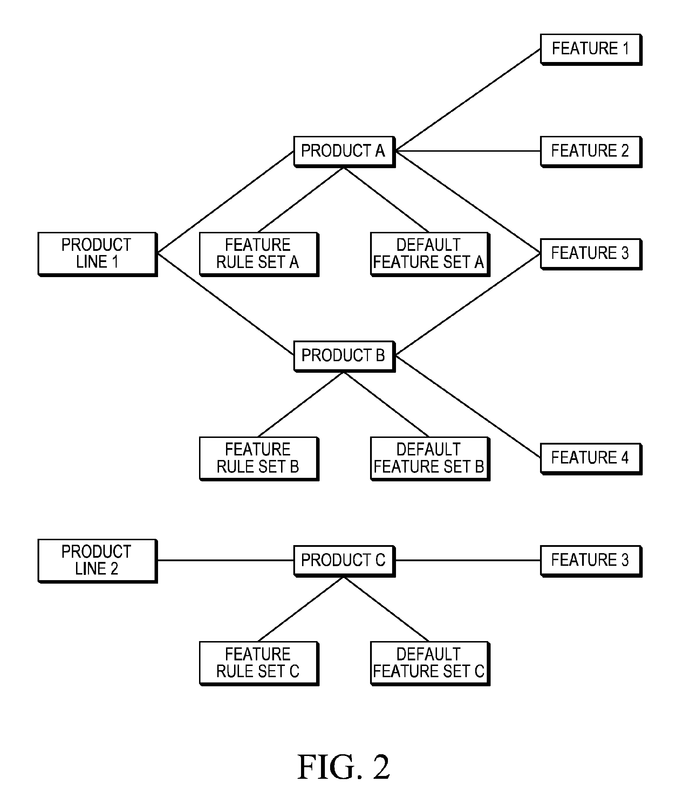

The relationship among the aforementioned elements of product feature information for product lines 1 and 2 is shown in FIG. 2. In this example products A and B are associated with product line 1 and product C is associated with product line 2. The feature set for product A includes features 1, 2 and 3, the feature set for product B includes features 3 and 4, and the feature set for product C includes feature 3. As shown, a feature rule set and a default feature set is associated with each product.

In some implementations there may be rules of association among the various elements. For instance, a product will generally belong to one product line, whereas a feature may be associated with one or more products. Likewise, a feature rule set specifies any interdependencies that may exist among features. For example one rule in the rule set may specify that a product may include feature 1 only if the product also includes feature 2. Accordingly, all features specified in a rule set associated with a product must be available for that product. Each product will typically have a default feature set and the features included in the default feature set must be available for that product.

The aforementioned license signature key associated with each product is used to sign feature licenses. Products with asymmetric cryptographic capabilities have an asymmetric license signature key and products without asymmetric cryptographic capabilities have a symmetric license signature key.

### FEATURE LICENSE MANAGEMENT MODULE

In order to support routine feature license management tasks such as license generation, updates, enforcement and revocation, the feature license management module 132 utilizes the format for a generic feature license, which contains the specification of the feature set to be enabled in a particular device. A generic feature license contains the following information: license format version; total length in bytes; sequence number, unique across all licenses generated from the system; product ID used in the system; device ID; secondary device ID, timestamp, time of generation; feature count; list of feature descriptors; signature, by the license signature key of a product; and signature algorithm. The device ID in a license specifies which device the license is for. The secondary device ID is optional and is used when a license needs to be bound to more than one device ID. The binding of a license to the device ID, and optionally the secondary device ID, is protected by the signature in the license, so that a license for one device cannot be used by another device with a different device ID or a different secondary device ID, if any.

The format of the generic feature license will be applicable across products from different manufacturers, except for non-generic products that already have their own license format before being added to the system and cannot easily adopt the generic license format.

Each feature descriptor contains the following information concerning the feature with which it is associated: feature ID, as defined for a product; feature qualifier type and value; feature type; expiration date, which is required if the feature type is subscription or trial. The information specified above is forwarded to a generic license generator to generate a feature license file.

Another aspect of the feature license management module 132 concerns the management of device IDs. Some products' business process may allow customers to obtain licenses for a specific set of devices. Such products would require device IDs for which licenses could be generated to be imported into the system, as soon as a batch of devices is manufactured and their IDs determined. To satisfy such a requirement, the system has a user interface that allows a user to upload a batch of device IDs in a single file for a specific product.

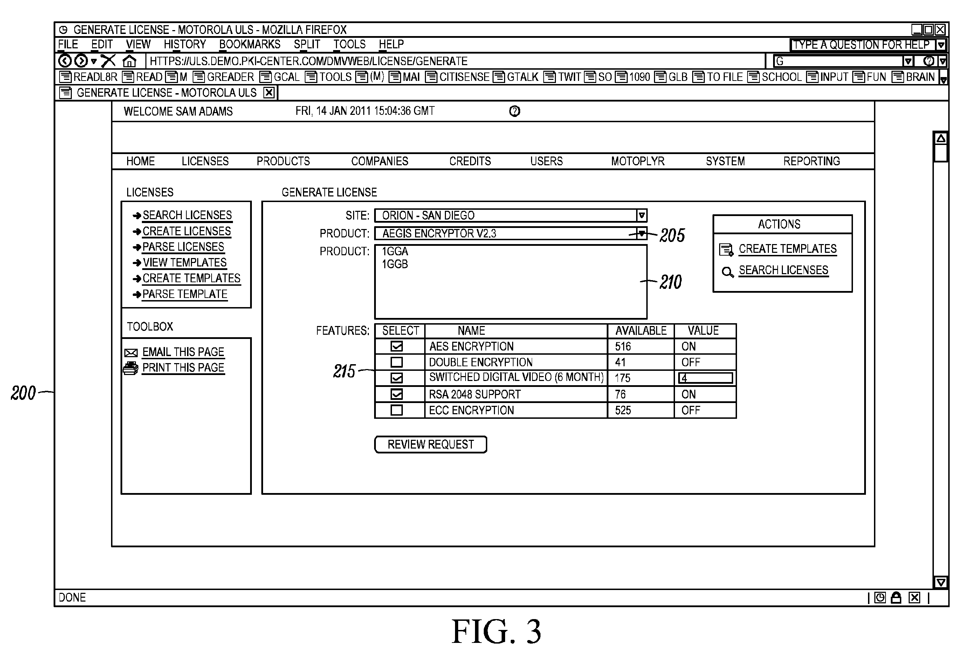

The feature license management module 132 also presents a user interface through which a user can request a feature license for a particular product device. One example of such an interface 200 is shown in FIG. 3. After the user logs into the system, the user identifies the product to which the device belongs. In the example of FIG. 3, a pull-down menu 205 is available from which the user may select the appropriate product, which in this case is an Aegis Encryptor v2.3. After identifying the product, the device ID is specified, typically by selecting a preloaded device ID or entering a device ID. In the example of FIG. 3, field 210 is provided in which the user can enter one or more device IDs. In this example two device IDs are entered, 1GGA and 1GGB. When more than one device ID is specified, the licenses generated for the devices will be identical, except for the device ID and signature.

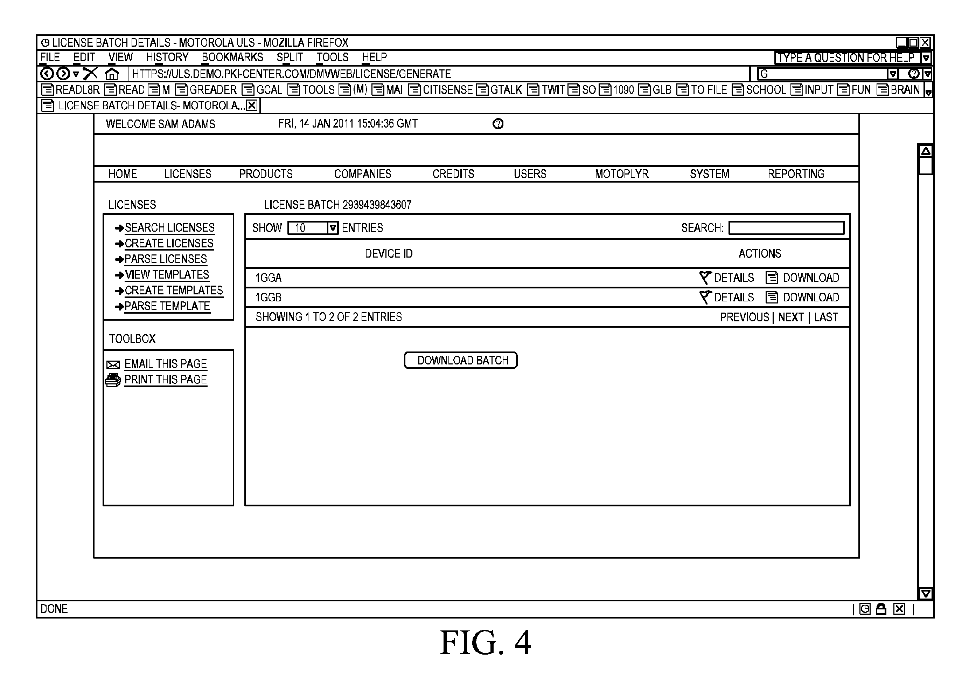

After the user has selected a product, the user interface 200 presents a field 215 listing the features which are defined for the specified product and for which the customer currently has available credit. This field also allows the user to specify which features are to be included in the new license and any qualifier values they may have. Finally, after the proper selections have been made the system generates the license, which can then be downloaded by the user. In some cases the user interface supports a batch mode of license generation for when the user needs to generate feature licenses for a large number of devices. In this case, the user will generally specify the devices either by selecting many preloaded device IDs, specifying a range of continuous device IDs, or uploading a list of device IDs. Typically the new licenses that are generated in a batch mode will be available to download in a single file. FIG. 4 shows an illustrative user interface through which the user can download in a batch mode the licenses requested through the user interface shown in FIG. 3.

Another user interface that is made available by the feature license management module 132 allows users to generate a replacement license for a device for the purposes of renewing, adding and/or removing various features, and/or for changing the qualifier value and expiration date of features that are currently present in the device. This user interface may be similar to that shown in FIG. 3, except that it will present the device's existing feature information in its most current feature license. It will also allow modifications to be made to the existing feature set so that a new license can be generated and downloaded. Once again, this user interface may operate in a single device mode or a batch mode, which can be used for multiple devices which have the same current feature set.

The feature license management module 132 also allows users to revoke a license, which occurs when a device's feature license needs to be replaced or removed. Upon revocation, the device generates a revocation confirmation file. When a revocation confirmation file for a device is uploaded into the system, the feature credits used by the features in the revoked license may be reclaimed, if allowed by the business process of the related product. A revocation confirmation file may contain the following information; the format version of the revocation confirmation file; the device ID and the product ID of the device whose license is being revoked; the sequence number of the license being revoked; a hash of the license being revoked; a timestamp, denoting the time of revocation; a signature and signature algorithm.

A user interface is provided to which the revocation confirmation file from a device can be uploaded into the system by a user. Alternatively, the revocation confirmation file from a device can be uploaded into the system by the device itself through an automated interface of the system, directly or indirectly. The information in the revocation confirmation file is used to correctly set the current license status and adjust feature credits as necessary. The user interface may support a batch mode for uploading multiple revocation confirmation files, which may be packaged in a single file.

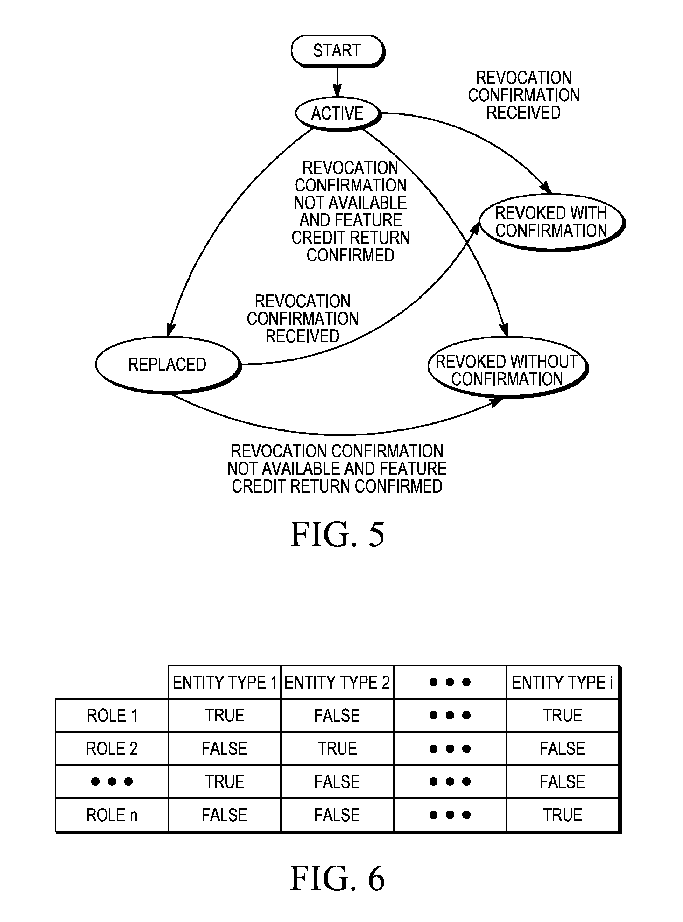

The status of a feature license at any time falls into one of four categories: "Active," "Replaced," "Revoked with Confirmation," and "Revoked without Confirmation." The transition of a license's status from one category to another is illustrated in FIG. 5.

When a feature license is newly generated, its status is "Active". When an existing feature license is replaced by a new license with a different feature set, the status of the original license becomes "Replaced". This transition is indicated in FIG. 5 by the arrow from the "Active" state to the "Replaced" state. When a license is replaced the user takes the new license and installs it in the device. During the installation process, a revocation file is generated by the device and uploaded to the system by a user. At this time the status of the old license becomes "Revoked with Confirmation." If a functioning device is being decommissioned its license needs to be revoked without generating a replacement. This triggers the transition of the license directly from the "Active" state to the "Revoked with Confirmation" state. If on the other hand a device is inoperable, its license may be "Revoked without Confirmation," and thus there is a transition shown in FIG. 5 from "Active" directly to "Revoked without Confirmation". Finally, the transition shown in FIG. 5 from the "Replaced" state to the "Revoked without Confirmation" state is triggered when a new license is generated but the revocation confirmation is lost and thus not received by the system.

### DEVICE LICENSE MODULE

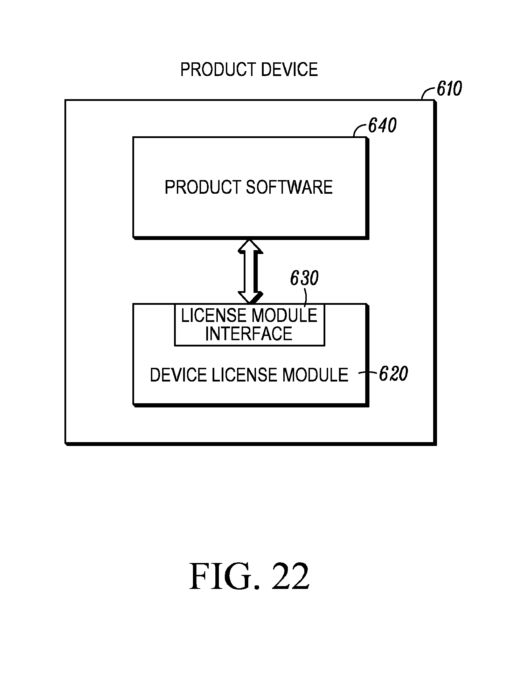

A device license module resides on the product devices and serves as an interface through which product devices can perform tasks related to feature licenses. FIG. 22 shows an example of a product device 610 on which such a device license module 620 is located. The module 620 has an interface 630 which is configured as an application programming interface (API) that resides on the product devices and communicates with the software 640 residing on the device 610. The tasks performed through such an interface relate generally to license enforcement and may include loading of the initial license, along with its validation, license replacement, with validation of the new license and generation of a revocation confirmation file for the old license. Additional tasks may include license removal, with generation of a revocation confirmation file for the removed license, a license presence check, a query for feature types and the feature qualifier value for a specific feature.

When validating a feature license, a device verifies a number of items including, for example, the signature of the feature license, the product ID in the license (which should match the device's own product ID) and the device ID in the license (which should match the device's own device ID). The device may also verify that the timestamp in the license is not for a time in the future (to prevent clock rollback on the device). Likewise, when replacing an existing feature license, the validation process may also include a verification of the new license's sequence number to ensure that it is larger than the old license's sequence number.

### USER MANAGEMENT MODULE

Various users of the system such as manufacturers and service providers may have internal infrastructure that includes enterprise user directories to authenticate users such as employees and the like. These enterprise user directories are often based on standard user directory databases such as the lightweight database access protocol (LDAP), for example. When possible, the user management module 134 integrates with these directory databases so that users can be easily authenticated.

Users who already have an entry in a user directory will register with the feature licensing system. During the registration process using the module 134, the user selects the particular user directory in which the user already has an entry. The system verifies the registration with the user directory and requests a system administrator to approve the registration. A system administrator can either reject or approve a user registration request. When approving a user registration, a system administrator also assigns a proper role or roles to the user. Once a user's registration is approved, and proper access privileges are assigned to the user, the user can log into the feature licensing system as an authenticated user. Users who do not already have an entry in an integrated user directory will need to create such an entry and then go through the above-mentioned registration and approval process to gain access to the feature licensing system.

The user management module 134 also manages and controls the roles assigned to users. That is, the module implements role-based access control so that users may be authorized to perform certain user actions and prohibited from performing other user actions. A user role is combined with a scope to limit the kinds of entities on which a user can carry out the tasks of the roles assigned to the user. For instance, a user assigned with the "Administrator" role and the "Company" scope can perform administrative tasks on companies, whereas a user assigned with the "Administrator" role and the "Site" scope can perform administrative tasks on sites. To further limit which exact entity a user can act on, a user may be assigned to a specific set of entities. For example, a user with the "Administrator" role and the "Site" scope may be assigned to Site A and Site B, enabling the user to perform site administrative tasks on Site A and Site B; whereas another user with the same role and scope may be assigned to Site C and Site D, enabling this user to perform site administrative tasks on Site C and Site D, but not Site A nor Site B.

Not every user role is meaningful for every type of entity. For instance, a user can be assigned the role of "Product Manager" for a specific product, making the user capable of modifying product information associated with that product. This role is not meaningful for a customer entity, because product information maintenance has nothing to do with customers. To define which roles are meaningful for which types of entity, a role-entity permission table, as illustrated in FIG. 6, may be maintained to prevent roles which are not meaningful for certain types of entities from being assigned to uses associated with those entities. The user management module 134 uses the permission table to manage user roles so that improper roles are not assigned.

### NON-GENERIC PRODUCT SUPPORT MODULE

Each non-generic product has its own license generator that implements the product's proprietary license generation mechanism. The non-generic product support module 135 provides an adapter for each of these non-generic license generators. The adaptor converts a generic license generation request to a request that is compatible with the non-generic license generator. A non-generic product record is maintained in the system and contains the information required by the product's license generator adapter, so that when a feature license for a non-generic product needs to be generated, the product's license generator adapter can be located and used.

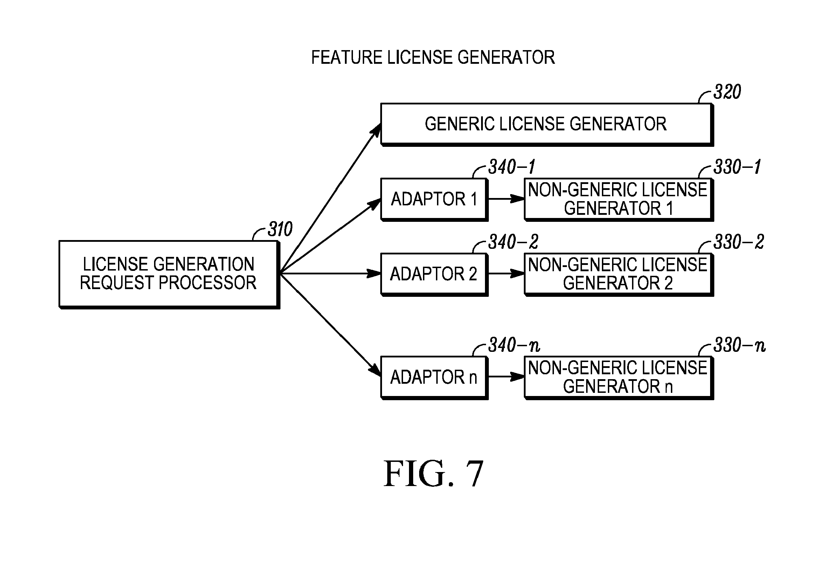

FIG. 7 shows a license generation request processor 310 and a generic license generator 320, which are associated with the feature license management module 132 of FIG. 1. When a license for a generic product or product line is to be generated, the license generation request processor 310 sends a list of requested features and other necessary information to the generic license generator 320 so that the license can be generated. Also shown in FIG. 7 are non-generic license generators 330₁, 330₂, 330ₙ, each of which is used to generate a license for a non-generic product or product line. An adaptor 340₁, 340₂, 340ₙ is provided for each of the non-generic license generators 330₁, 330₂, 330ₙ. The adaptors receive requests from the license generation request processor 310 and, using information from the non-generic product support module 135, translate them into a format that allows the non-generic license generators 330₁, 330₂, 330ₙ to generate the non-generic licenses.

### FEATURE CREDIT MANAGEMENT MODULE

### Manufacturer Feature Credit Management

A customer's entitlement to product features is established by sales orders for those features. That is, a customer purchases product features, often by submitting a purchase order to a manufacturer, and the purchased features are recorded in a sales order by the manufacturer. The feature licensing system can automatically acquire the pertinent sales order information in the manner described below and assign the appropriate feature credits to the customer.

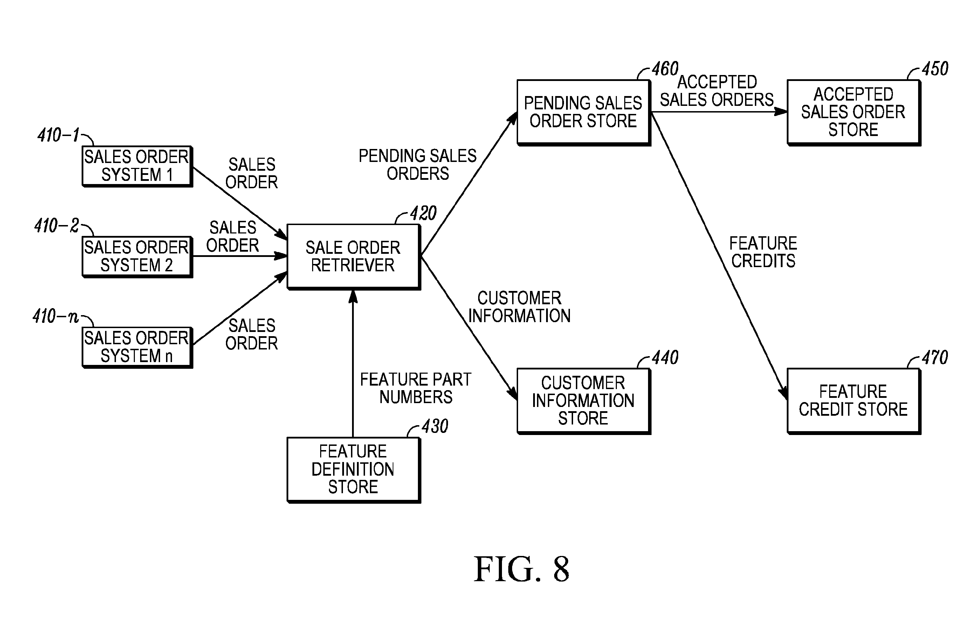

Sales orders of a manufacturer are usually managed by a sales order system used by the manufacturer. The information flow of sales order information into the feature licensing system is illustrated in FIG. 8. FIG. 8 shows sales order systems 410₁, 410₂... 410ₙ, which are each associated with a manufacturer. The feature credit management module 133 includes a sales order retriever 420, which periodically searches the sales order systems 410 for new sales orders that contain line items for feature part numbers that are stored by the feature definition module 130. In FIG. 8 feature definition module is represented by feature definition store 430, which stores the product feature information that is used for the purpose of feature licensing.

When the sales order retriever 420 finds a new sales order for a feature defined in the system, it retrieves a copy of the order, which includes the sales order number, sales order line item number, feature part number and the ordered quantity. The sales order retriever 420 also copies the customer information related to such orders, including the customer organization unit against which the resulting feature credits should be charged, to a customer information store 440. The identity of the sales order system from which the sales order was retrieved is kept together with the sales order information and customer information retrieved from that system, so that such information can be traced back to its source.

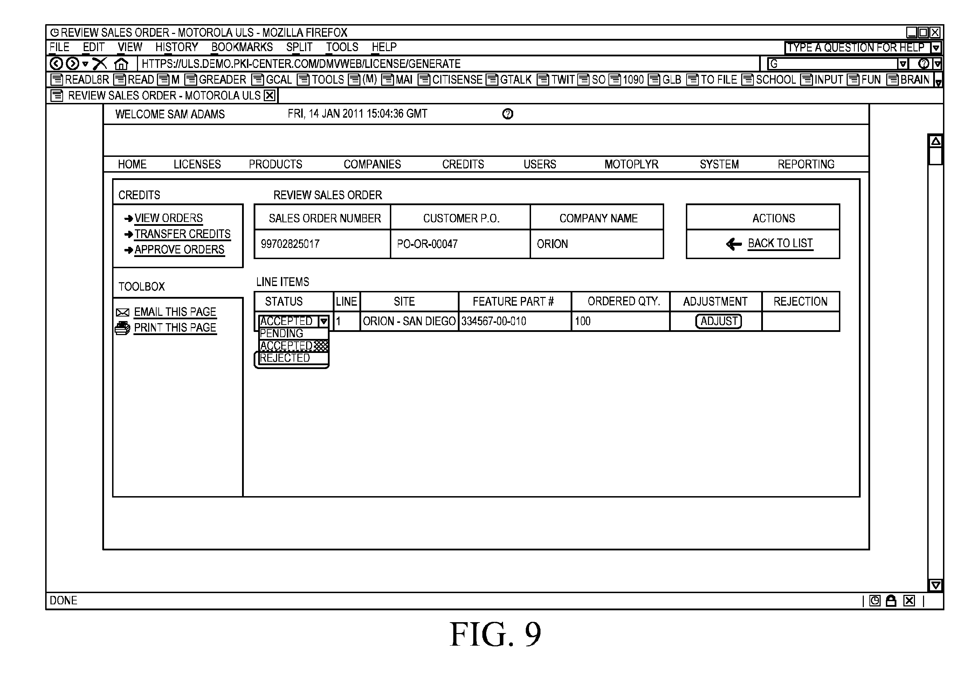

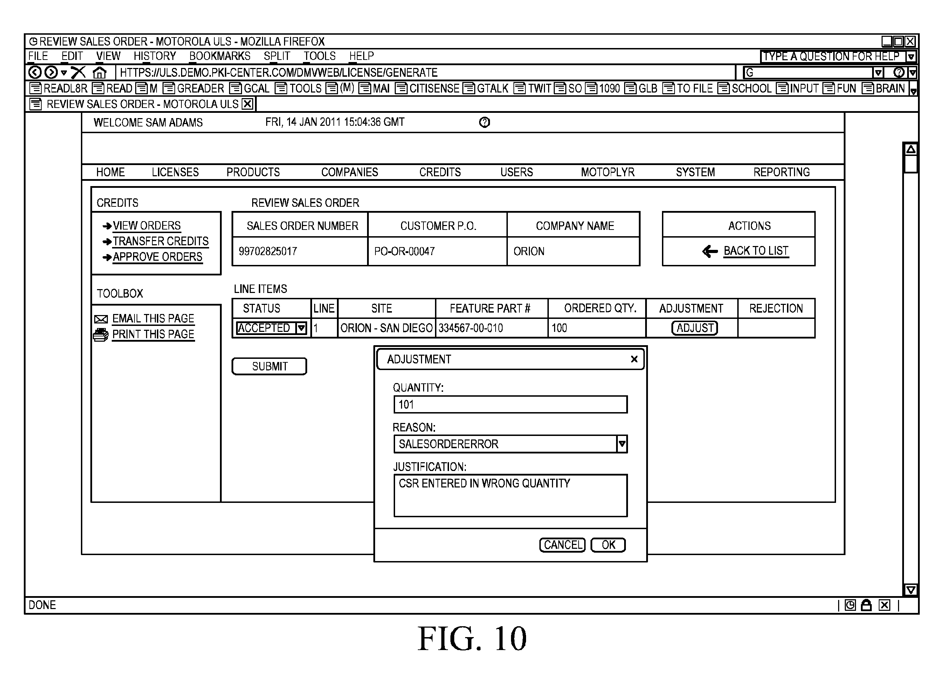

The sales order retriever 420 also transfers the sales order to an accepted sales order store 450, which creates a corresponding feature credit record that is transferred to feature credit store 470. Optionally, instead of sending the sales order directly to the accepted sales order store 450, the sales order retriever 420 may transfer the sales order to a pending sales order store 460, where it is held until it can be reviewed by a user who has intimate knowledge of the product, related products, the customers associated with the product and their sales orders. This manual review step can prevents incorrect data from entering the feature licensing system. The user who reviews the pending sales orders can either accept or reject individual line items in the sales order. This same user can choose to change a line item's quantity and the customer organization unit the line item is associated with. The user may be required to enter a specific reason for each change that is made. When a line item is accepted, it is then transferred to the accepted sales order store 450. FIG. 9 shows a user interface presenting a sales order that is being reviewed and FIG. 10 shows the user interface when a change is being made.

The system allows the manual sales order review step to be turned on or off for a product or product line. In general, products or product lines with a simple feature set and often simple sales orders may not have many errors in the sales orders and hence may not require such a manual sales order review step.

When the quantity of a line item is negative, as in a credit or a return line item, the quantity of the corresponding feature credit record in the accepted sales order store 450 will also be negative. Such a negative feature credit quantity reduces the total available credit for a feature.

In some cases, there may be a need for adjusting a feature credit without a sales order. In some cases the system may allow authorized users to make changes to the available quantity in a feature credit record. When adjusting a feature credit, the user may be required to enter a specific reason for the adjustment, which is logged as part of the adjustment action.

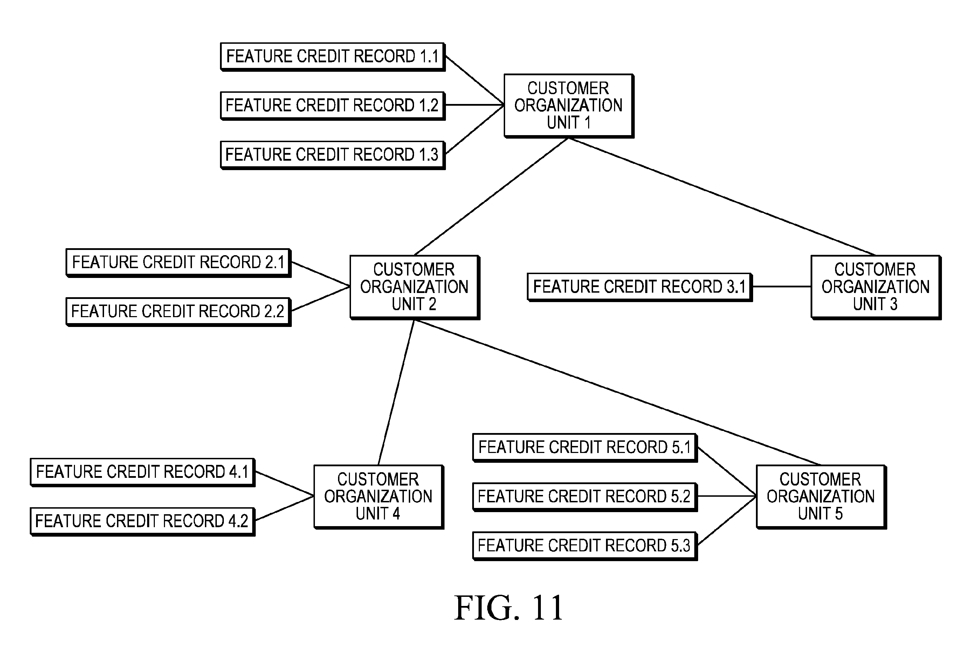

Feature credit records are generally associated with customer organization units. All the organization units of a customer are maintained in a configurable hierarchical structure, which mimics the usual organizational structure of a company, as illustrated in FIG. 11.

The total quantity of a feature available to a certain customer organization unit depends on the feature credit accounting rule established for the customer and the feature's product. The rule can allow the calculation of the total available quantity of a feature to include feature credit records associated with all the organizational units of customer or a subset of the customer organization units. For instance, the total available quantity of a feature may be associated with each individual organization unit, an individual unit and all higher level units in the organization's hierarchy, all other organization units at the same hierarchical level of a particular unit, or all the organizational units of the same customer.

When a new feature license is generated, the quantity of an included feature is deducted from one or more feature credit records that are included in the credit availability calculation. The relationship between a feature license and the feature credit records from which the feature was deducted may be logged for future reference.

When a replacement feature license is generated, the increased quantity of a feature in the old license and the quantity of a newly included feature are deducted in the same way as described above. However, a decreased quantity of a feature in the old license may not be returned immediately. Only when a license's revocation confirmation is received is the quantity of each feature in the license returned to the feature credit records from which it was deducted. This applies to both replaced and revoked licenses and occurs when the license status changes from "Active" or "Replaced" to "Revoked with Confirmation".

### Third Party Supplier Feature Credit Management

The previous section largely described the management of feature credits involving manufacturers and customers. In that situation a customer who wants to generate a license containing a set of features must have sufficient pre-paid credits for the features. Such customer credits are created as a result of a sales order for the features being placed by a customer to a manufacturer. The features sold by a manufacturer are assumed not to depend on any third-party features that are licensed by any supplier of the manufacturer.

As feature licensing is adopted by more and more companies, certain third-party suppliers started to license to manufacturers the features available on components they sold to manufacturers. In one scenario, for instance, a supplier agrees to give a manufacturer the capability of generating feature licenses for component features that the manufacturer sells to its customers. As preconditions for giving the manufacturer license generation capability, the supplier requires the manufacturer to purchase feature credits from the supplier and provide detailed audit reports about how such credits are used, whether by the manufacturer itself or the manufacturer's customers.

In another scenario, instead of using the feature licensing system to generate licenses, a supplier issues feature licenses for manufacturers to purchase and install on final products or integrate into manufacturer issued licenses. How exactly supplier-issued licenses are used for a product is out of the problem scope of this disclosure. However, the accounting of such supplier-issued feature licenses can be accomplished by treating supplier- issued licenses as credits for features in such licenses. For example, if a manufacturer purchases 10 supplier-issued licenses which each have three Feature "A"s and one Feature "B", the manufacture is given 30 credits for Feature A and 10 credits for Feature B. When such a license is used on a product made by the manufacturer, three Feature "A" credits and one Feature "B" credit are deducted from the manufacturer's credit pool. In this way supplier-issued licenses can be effectively handled in the same way as licenses issued by the feature management system for supplier features.

From the manufacturer's standpoint, feature credits it purchases from the supplier and uses to fulfill the feature licensing needs of its customers are called "Third-Party Feature Credits". The ultimate goal for third party feature credit management is to provide an accurate account of feature credits in the manufacturing, sales, return, repair and advanced exchange processes.

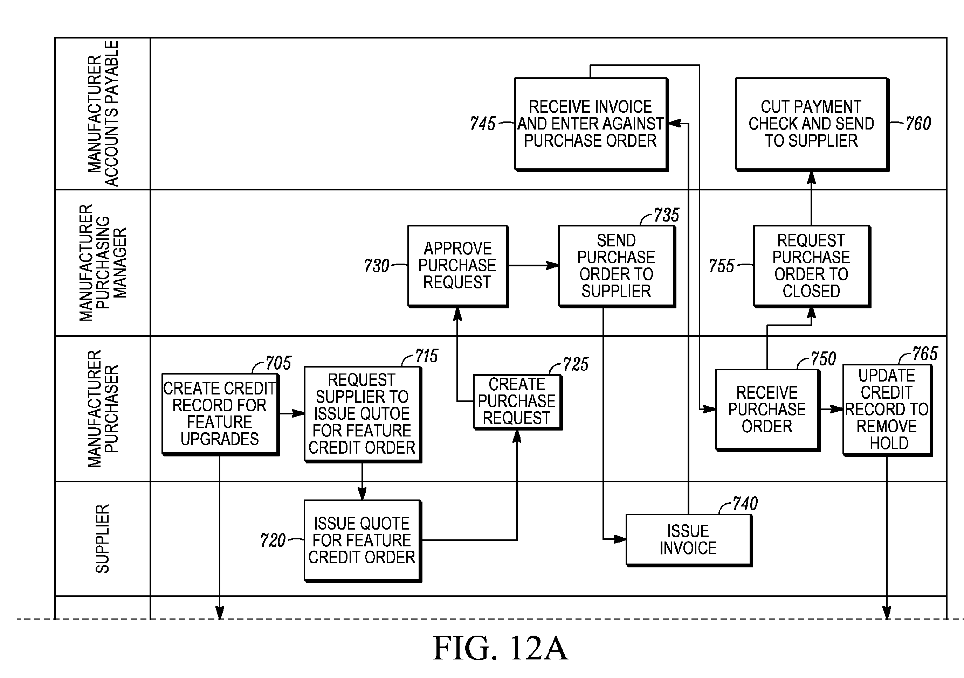

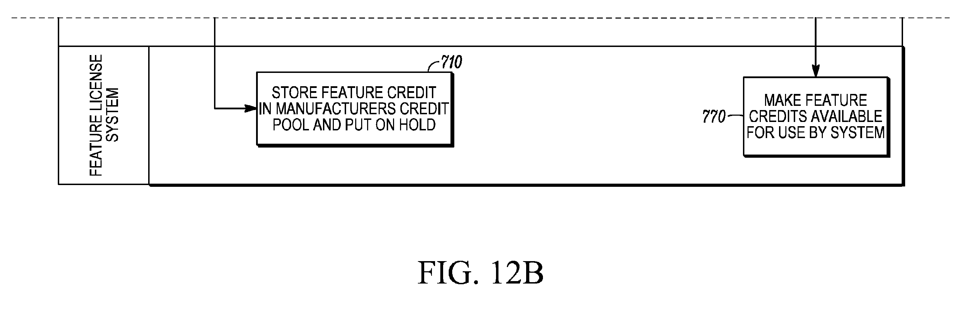

The following discussion will describe the process of establishing the inventory of feature upgrade licenses using the feature credit management module. Different aspects of this process will be illustrated using a number of different scenarios. In the first scenario the manufacturer wishes to purchase a certain number of feature upgrades from a supplier, which requires the purchase of feature license upgrades. One example of the process flow for this scenario is shown in FIG. 12. As shown, this process flow involves the feature license system, the supplier and the manufacturer. In this example three different internal organizations of the manufacturer are shown: a purchaser, who is a user of the feature license system, a purchasing department and an accounts payable department. These organizations are depicted because they represent a common division of responsibility within a company. It should be noted, however, that the various functions may be divided among a company's internal organizations in a wide variety of different ways and that this particular division is provided for illustrative purposes only and not as a limitation on the subject matter disclosed herein.

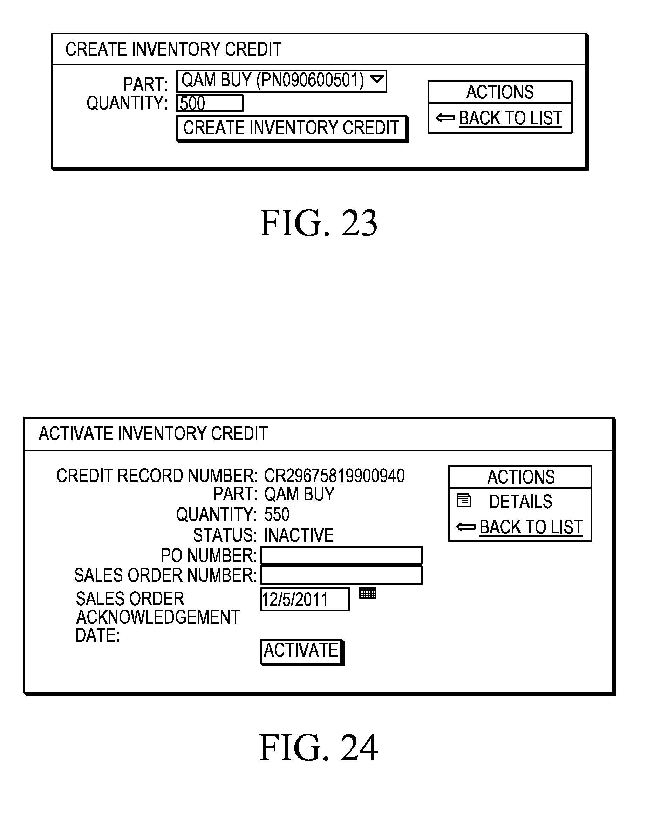

The process begins in step 705 when the manufacturer purchaser creates a credit record for a specified number of feature upgrades. FIG. 23 shows a user interface that may be used to create a credit record. The purchaser creates this credit record through the feature credit management component 133 of FIG. 1 and, in step 710, stores it in the manufacturer's credit pool maintained in the features credit store 470 of FIG 8. In addition, the purchaser places this credit record on hold, pending approval and payment by the manufacturer to the supplier. The purchaser also requests the supplier to issues a quote for the feature credit or upgrade order in step 715. The request includes the identifier of the credit record that was created. Upon receiving the quote issued by the supplier in step 720, the purchaser creates a purchase request from the manufacturer's purchasing department in step 725. The purchasing department, in turn approves the purchase request in accordance with its own internal procedures in step 730 and creates the purchase order (which includes the credit record identifier) and sends it to the supplier in step 735. After receiving the purchase order, the supplier issues an invoice referencing the credit record identifier and the purchase order number and sends the invoice to the manufacturer's accounts payable department in step 740.

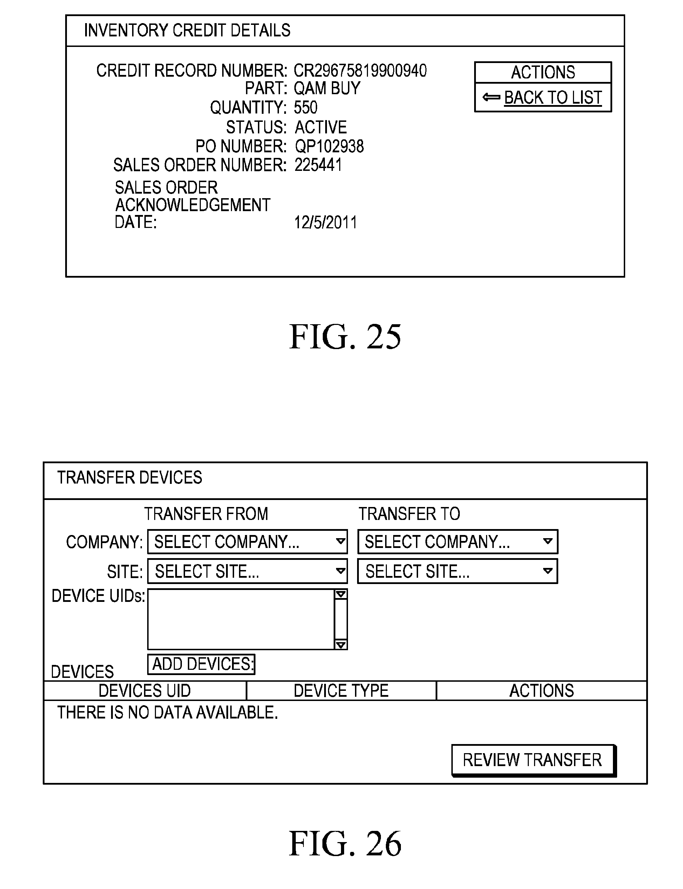

The accounts payable department receives the invoice in step 745 and enters it against the purchase order. The purchaser receives the purchase order in step 750 and requests that it be closed by the purchasing department in step 755. In response, the accounts payable department cuts a payment check in step 760 and sends it to the supplier. Also, in step 765, after receiving the purchase order, the purchaser updates the credit record created at the beginning of the process to remove the hold so the credits are now usable by the feature license system in step 770. FIG. 24 shows a user interface that may be used to remove the hold and activate the credits. The hold may be automatically removed by the system when the purchaser adds the purchase order number and the invoice date to the credit record. FIG. 25 shows a summary of the credits that have been made available, which may be presented by the feature licensing system.

The purchasing process described above may be initiated when the purchaser receives a notification from the license framework system that the balance in the manufacturer's credit pool has dropped below a preconfigured threshold value. Typically a default number of feature credits will be purchased unless the purchaser is requested to purchase a different amount by a sales team or other group within the manufacturer organization.

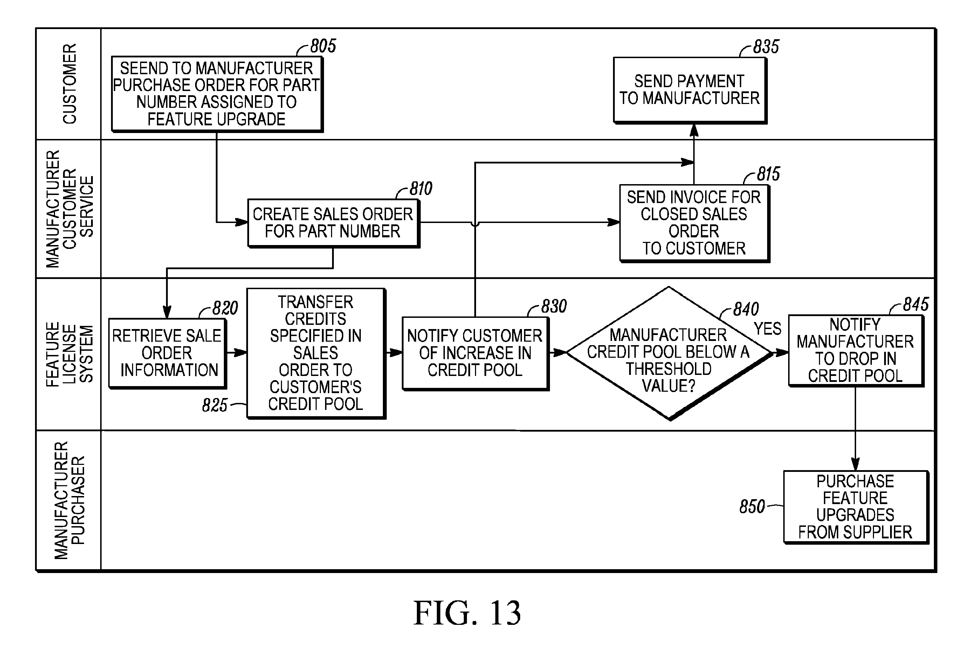

Another aspect of the upgrade process involves the customer's purchase of feature credits from the manufacturer. This aspect will be illustrated with reference to the flow process of FIG. 13. Before this process can begin, the manufacturer creates a part number for the feature upgrade. The process then begins when the customer creates a PO for the part number. In some case the part number may be included in a PO that contains other items to be purchased. The customer sends the PO to the manufacturer's customer service department in step 805, which in step 810 will create a sales order line for the part in a new sales order or a sales order that contains other items.

Once a sales order line for a feature upgrade is closed, the feature license system (e.g., the sales order retriever 420 in FIG. 8) retrieves the sales order line information in step 820 and transfers the number of credits in the sales order line from the manufacturer's credit pool to the customer's credit pool in step 825, updating the features credit store 470 accordingly. At the same time, the feature license system notifies the customer of the balance increase in the customer's credit pool in step 830. In addition, the manufacturer's customer service department sends the invoice for the closed sales order line to the customer in step 815. Based on the balance increase notification and the invoice, the customer sends payment to the manufacturer in step 835.

When transferring credits from the manufacturer's credit pool to a customer's credit pool, the feature license system allows the balance of the manufacturer's credit pool to go negative to allow feature credits to be made available to the customer as soon as possible. This may create a back order situation where the manufacturer needs to make a purchase from the supplier to replenish the manufacturer credit pool as soon as possible. This situation is handled in the same way as the situation where the balance of the manufacturer credit pool is below a certain threshold. That is, after a credit transfer, the feature license system checks the balance of the manufacturer's credit pool. If the system determines in step 840 that the balance has dropped below a preconfigured threshold, it sends a notification to the manufacturer purchaser in step 845, who can then initiate the process of purchasing feature upgrades from the supplier in step 850.

Yet another aspect of the upgrade process may arise during the actual manufacturing process of the device or product. In this scenario the customer may wish to order a device containing the supplier-provided component that is upgraded beyond its default capacity, which is generally established by the supplier. To make this possible, the manufacturer will need to upgrade the feature of the supplier-provided component while the device is still in the factory. Because the manufacturer may order various supplier-provided components with different default capacities, exactly how many feature upgrades are needed on a device is determined based on the default capacity of the particular supplier-provided component used in the device and the desired capacity ordered by the customer.

When an upgrade license is generated in the factory, the feature license system deducts the corresponding upgrade credits from the manufacturer's credit pool. After the credit deduction, the feature license system checks the balance of the manufacturer's credit pool. If the balance is below the preconfigured threshold, the system sends a notification to the manufacturer's purchaser, who can initiates the process of purchasing feature upgrades from the supplier. When a customer orders a device at its default capacity, there is no need for a factory upgrade. However, for the purpose of recording in system the ID of the device and the ID of the supplier-provided component used in the device, the device factory still performs a zero-unit upgrade in the feature license system. Alternatively, the device factory may use other means to provide the device IDs and other required information to the feature license system.

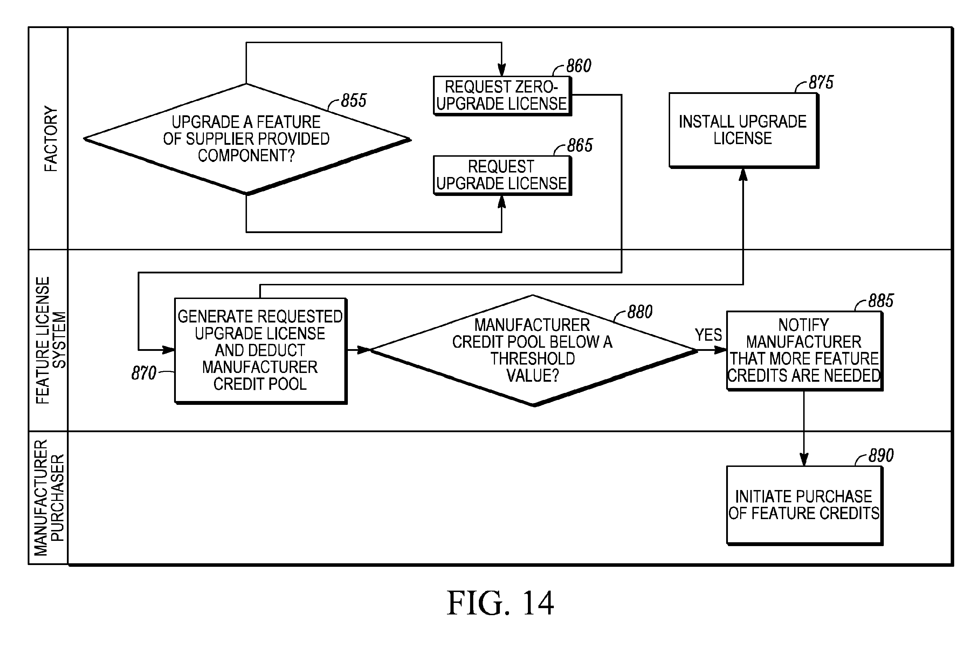

One example of the process flow for upgrading features during the manufacturing process is shown in FIG. 14. At step 855 the feature license system determines if there is a need to upgrade a feature of a supplier-provided component. If no, then the system simply requests a zero-upgrade license in step 860. Alternatively, if an upgrade is needed, the system requests an upgrade license containing the necessary number of upgrades in step 865. The feature license system generates the upgrade license in step 870 and deducts corresponding number of feature credits from the manufacturer's credit pool. If the balance is found to be below the preconfigured threshold in step 880, the system sends a notification to the manufacturer's purchaser in step 885, who can initiate the process of purchasing feature upgrades from the supplier in step 890. Meanwhile, in addition, the factory installs the upgrade license in step 875.

Yet another aspect of the upgrade process occurs when a customer has a defective device and needs to request a replacement. In one scenario the device is first returned by the customer for repair or replacement, after which a replacement or repaired device is sent. Other scenarios, discussed later, occur when a replacement device is sent to the customer before the customer returns the defective device. In the repair case, if the supplier-provided component in the device is to be sent to the supplier for repair, the factory will use another supplier-provided component in stock to build a replacement device. In this case, the feature upgrades applied to the replaced supplier-provided component may be reclaimed. For convenience, the supplier-provided component in either case is referred to as being a returned component in the remainder of this section.

A returned component may have factory-provisioned feature upgrades, customer feature upgrades, or both. Whether feature upgrades on a returned component should be reclaimed by the manufacturer and/or the customers depends on business agreements between the manufacturer and the supplier and between the manufacturer and the customers. Accordingly, factory personnel handling a returned component will need to consult these agreements to determine whether credits for factory upgrades and/or customer upgrades should be returned to their respective credit pool.

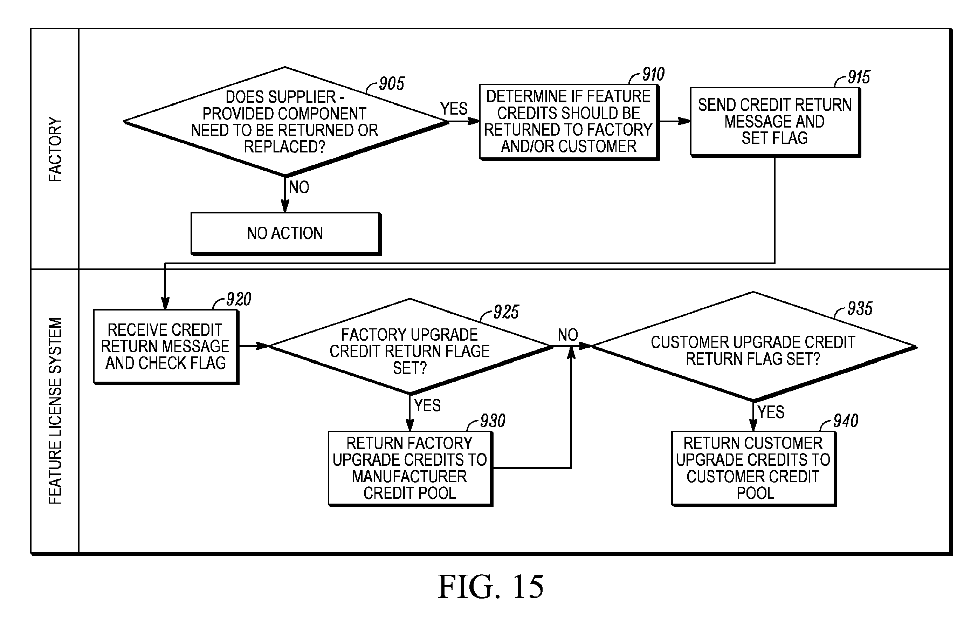

The process flow for the return process is shown in FIG. 15. After the factory determines that the supplier-provided component needs to be returned or replaced in step 905, the factory determines whether the credits should be returned to the factory and/or the customer in step 910. Based on this determination, a factory staff member sends a credit return message to the feature license system in step 915. The staff member sets none, any one or both of the two flags in the message, one for a factory credit return and the other for a customer credit return. When the feature license system processes the credit return message, the system checks whether the two flags are set in step 920. If the system determines in step 925 that the factory credit return flag is set, the system returns any credits used for factory upgrades back to the manufacturer credit pool in step 930. If the system determines in step 935 that the customer credit return flag is set, the system returns any credits used for customer upgrades back to the customer's credit pool in 940.

When a replacement device is sent to the customer before the customer returns the defective device, the replacement may be provided by the device factory or by a third party contractor. The defective device is referred to as the "to-be-returned device". The third party contractor generally stocks units of the device with various feature capabilities and uses them to provide service to customers who purchased a service contract from the manufacturer.

Typically there are two types of third party contractors: credit-stocking and non-credit-stocking contractors. Credit-stocking contractors have their own credit pools, which are managed in the same way as regular customers' credit pool using the processes described above. Non-credit-stocking contractors do not have their own credit pool.

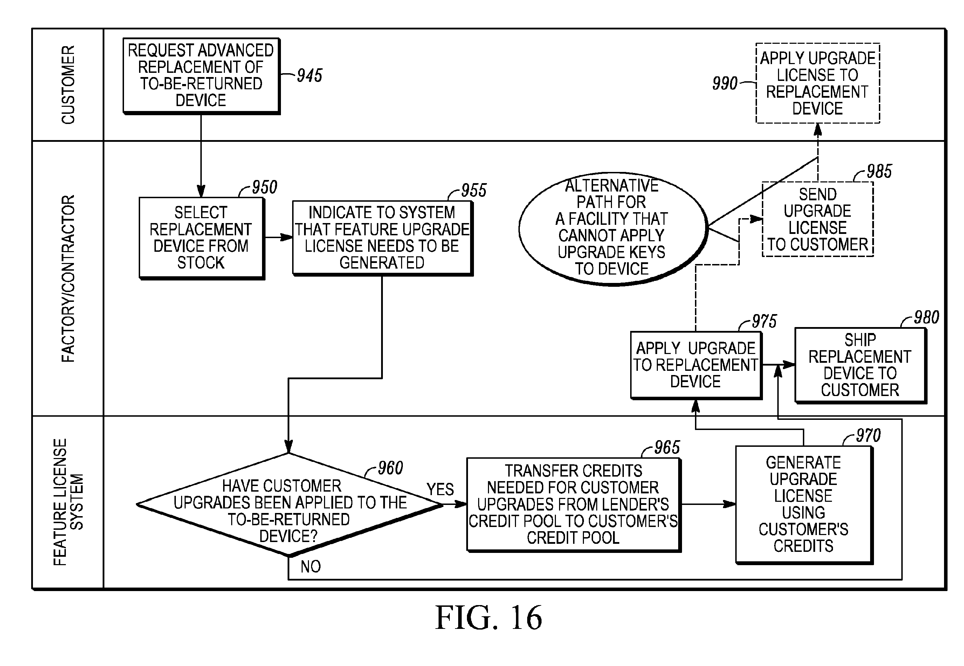

A process for tracking credits for the advance replacement of a device by the factory and by a credit-stocking contractor with credit lending will be described first, followed by the process of tracking credits for non-credit stocking contractors with credit lending. The former process will be described with reference to FIG. 16.

When a customer requests advance replacement of a to-be-returned device in step 945 of FIG. 16, the factory or contractor selects a device in stock in step 950, which is to be used as the replacement device. The device that is selected will generally has the same feature set as the to-be-returned device. When the to-be-returned device already includes customer upgrades, the replacement device may be upgraded using the customer's upgrade feature credits before sending it to the customer. In this way the customer receives a replacement device with the same total set of upgrades as on the to-be-returned device. However, at the time of this upgrade, the customer may not have enough credits (and the upgrade feature credits on the to-be-returned device cannot be returned to the customer at this point since the device has not yet actually been returned). To be able to perform the upgrade using the customer's credits, the device factory or the contractor lends feature upgrade credits from its own credit pool to the customer to cover the upgrades that need to be applied to the replacement device. When the device factory or the contractor receives the to-be-returned device, the credits used for any customer upgrades on the device are returned to the device factory or the contractor, respectively. For convenience, in the following discussion the device factory and any contractor that may be involved are referred to as "the lender".

After the lender picks a suitable replacement device for a to-be-returned device, the lender uses the feature license system in step 955 to indicate that upgrade keys need to be generated to upgrade the device as necessary. The lender also indicates to the system whether any credits should be lent to the customer. In step 960 the feature license system determines if any customer upgrades have already been applied to the to-be-returned device. If there are none, the system takes no further action. If there are any upgrades, the system transfers the number of credits needed for the customer upgrades from the lender's credit pool to the customer's credit pool in step 965, and then generates an upgrade license for the replacement device in step 970, which consumes the same amount of credits that are being lent to the customer. Because the device's license is generated using the customer's credits, the device is automatically associated with the customer in the feature license system. The factory or contractor then applies the upgrade to the device in step 975 and ships the replacement device to the customer in step 980.

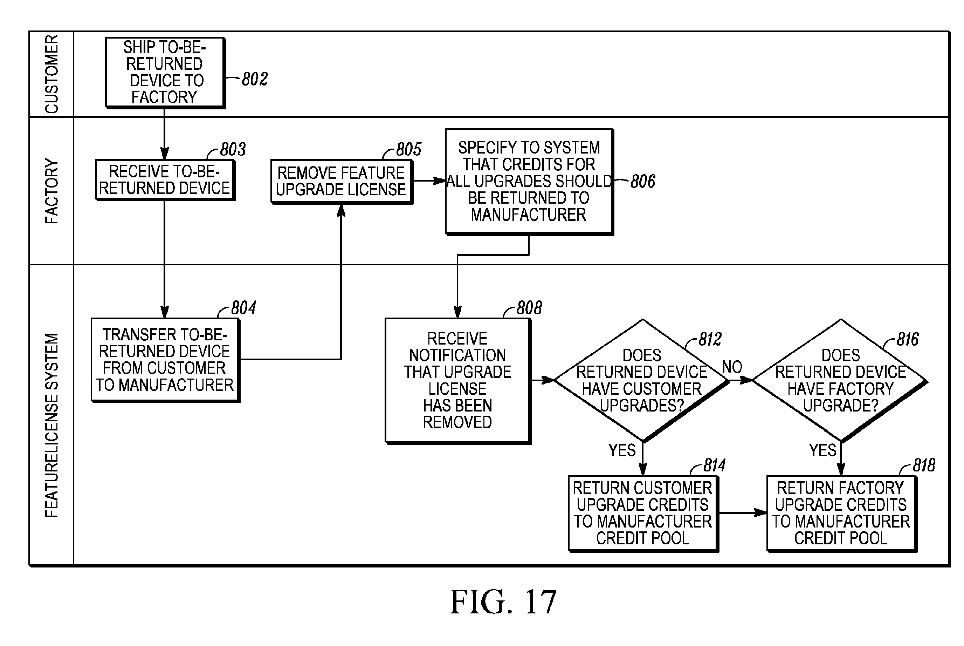

While it is desirable for a customer to receive a replacement device with the same set of feature upgrades as are in the to-be-returned device, the device factory or contractor may not have the capability of performing the upgrade on behalf of the customer. In this case, personnel associated with the manufacture may use the feature license system to perform an advanced replacement of feature upgrades, and then separately send the upgrade license to the customer in step 985. The customer, in turn, will apply the upgrade license in step 990 to the replacement device after it is received. An example of the process performed by the feature license system when a customer returns to the device factory a device for which a replacement device has been provided in advance using feature credits the manufacturer lent to the customer is described with reference to FIG. 17. The customer ships the to-be-returned device in step 802. When the device factory receives a returned device in step 803 from a customer for which a replacement device has already been sent, the factory first transfers the returned device from the customer to the manufacturer in the feature license system in step 804. The factory then removes any feature upgrade license from the device in step 805 and, in step 806, specifies (e.g., by setting the appropriate flags) in the feature license system that all the credits used for both factory and customer upgrades should be returned to the manufacturer. The system receives notification of the license removal in step 808. If there are any customer upgrades on the returned device as determined in step 812, the system returns the credits used by those upgrades to the manufacturer credit pool in step 814. The feature license system determines if there are factory upgrades on the returned device in step 816, and, if so, the credits used by those upgrades are returned to the manufacturer credit pool in step 818.

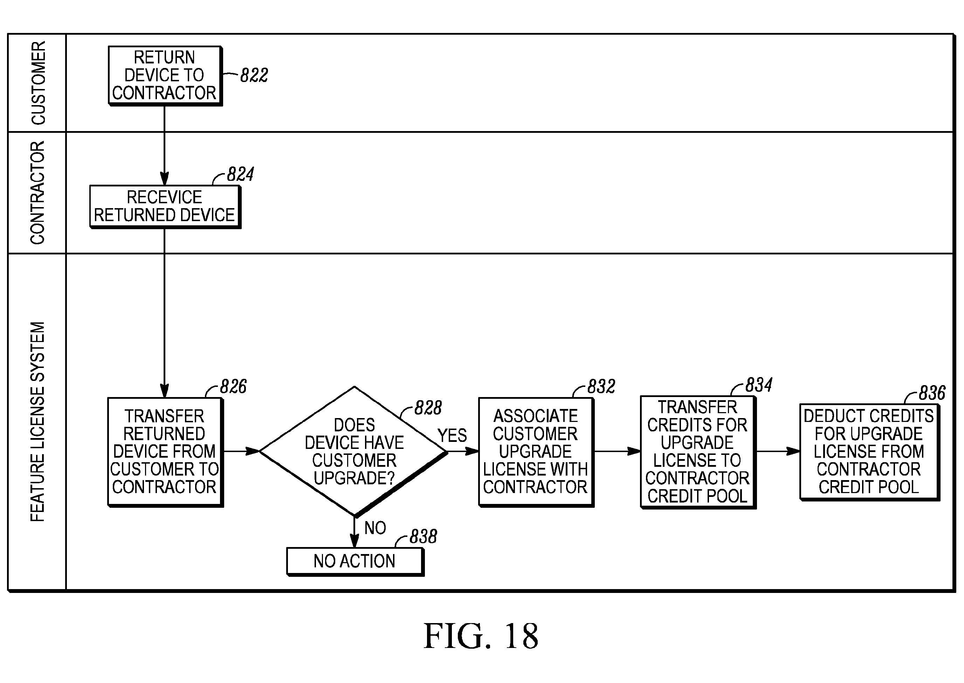

FIG. 18 shows a process flow that is performed when a third party credit-stocking contractor receives a returned device for which a replacement device has been sent. First, in step 822, the customer returns the device to the contractor. The contractor, after receiving the device in step 824, in turn, transfers the returned device from the customer to the contractor in the feature license system in step 826. If it is determined in step 828 that the device has customer upgrades, the credits consumed by the customer upgrades are transferred from the customer to the contractor (otherwise no action is taken, as indicated by step 838). In step 832 the transfer of credits which have been consumed is performed in the feature license system by associating the device's feature upgrade license with the contractor. The number of credits used by the customer upgrades is added to the contractor's credit pool in step 834 and the same number of credits is deducted from the contractor's credit pool in step 836. A contractor may send a returned device to the device factory for refund or repair (without advanced replacement from the factory). From this point on the contractor will be treated as a regular customer in the return process described above with reference to FIG 15.

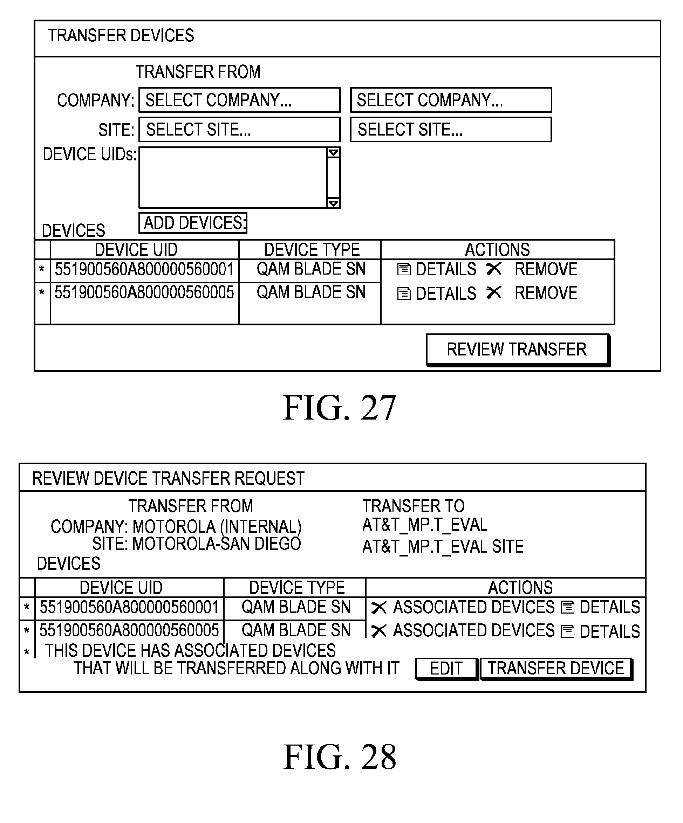

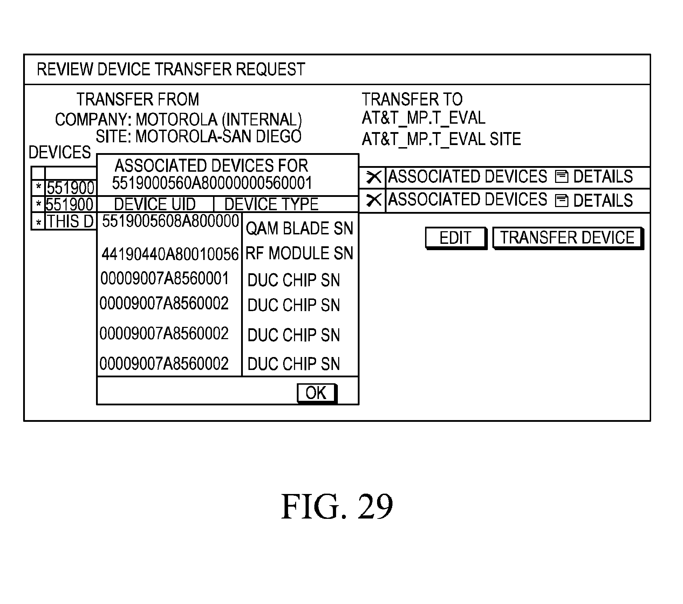

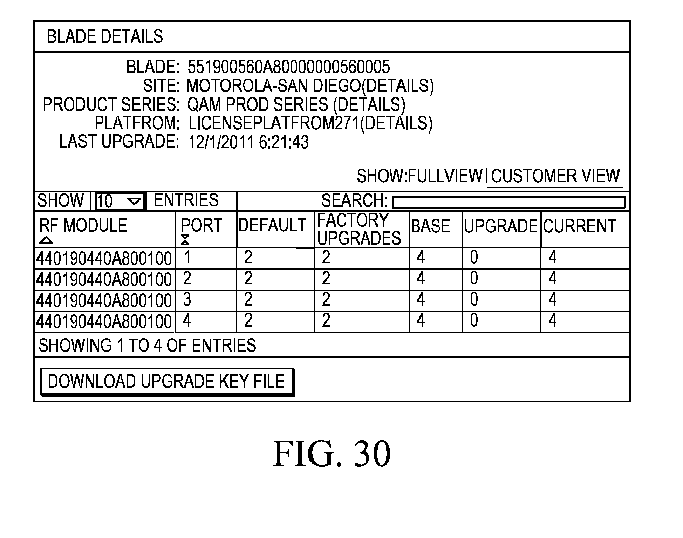

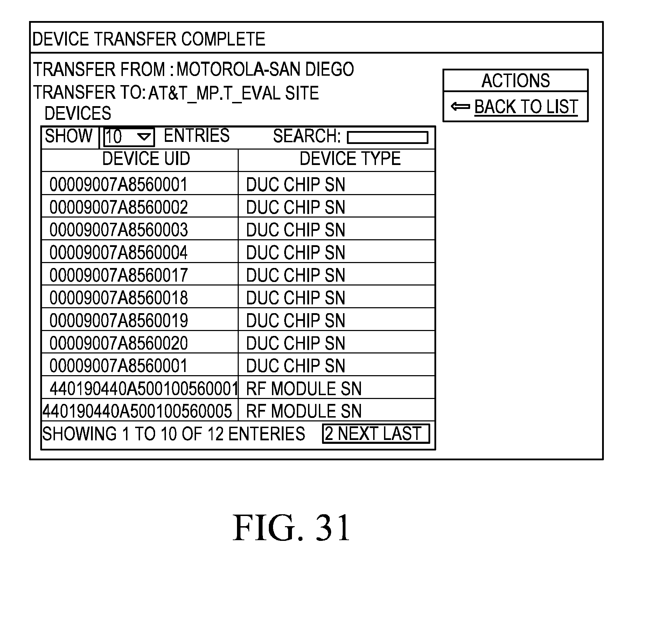

FIGs. 26-31 show user interfaces that may be provided by the system which the contractor may use to transfer the returned device from the customer to the contractor. FIG. 26 shows the initial user interface screen and FIG. 27 shows the initial screen after the contractor has specified the device(s) being returned and the companies from which and to which the device(s) are being transferred. FIG. 28 shows an interface screen that allows the contractor to review the transfer request and FIG. 29 shows an interface screen that is presented if the contractor selects one of the Associated Devices icons in FIG. 28. Likewise, FIG. 30 shows an interface screen that is presented if the contractor selects one the of the Details icons shown in FIG. 28. Finally, the interface screen in FIG. 31 is presented after the contractor completes the transfer by selecting the Transfer Devices icon in FIG. 28.

If the device received by the lender is different from the to-be-returned device and the received device has a different number of customer upgrades, the number of credits lent to the customer will then be different from the number of credits that can be returned. The difference between the two numbers is reconciled by either having the lender invoice the customer for the extra credits lent, or having the lender give the customer a refund for the extra credits returned. The feature license system need not be involved in this process.

When a customer requests advanced replacement for a to-be-returned device from a non-credit-stocking contractor, the contractor picks a suitable replacement device and works with manufacturer support staff to perform an advanced replacement of feature upgrades, with an indication that credits should be lent to the customer if necessary. Since a non-credit-stocking contractor does not have its own credit pool, it cannot lend credits needed for any customer upgrades to the customer.

In this case, the manufacturer lends the credits needed for customer upgrades to the customer from the manufacturer credit pool. A manufacturer support staff member generates a feature upgrade license for the replacement device using the loaned credits and e-mails it to the customer. After the contractor ships the replacement device to the customer, the feature license system will associate the replacement device with the customer.

Every to-be-returned device received by the contractor is passed on to the factory. When the factory receives the returned device, the factory transfers it from the customer to the manufacturer in the feature license system. The factory then removes any factory upgrades and any customer upgrades from the device and indicates to the feature license system that all the credits used by any upgrades should be returned to the manufacturer. If there are any factory and/or customer upgrades on the returned device, the feature license system returns the credits used by them to the manufacturer credit pool.

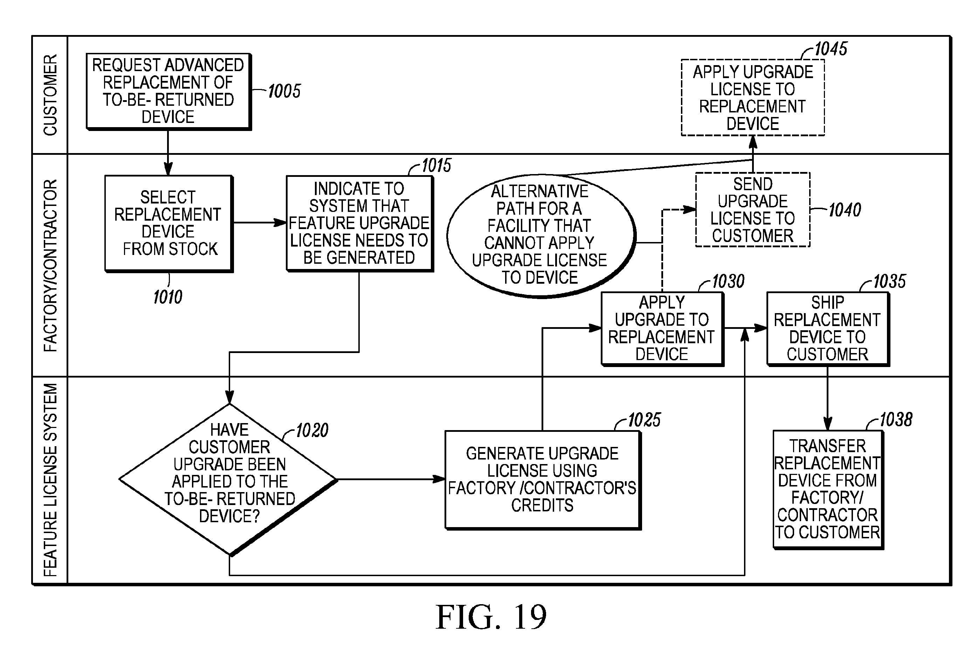

FIG. 19 shows a process for tracking credits for the advance replacement of a device by the factory or a third party contractor without lending credits to the customer. When a customer requests advance replacement of a to-be-returned device in step 1005 of FIG. 19, the factory or contractor selects a device in stock in step 1010, which is to be used as the replacement device. The device that is selected will generally has the same feature set as the to-be-returned device. When the to-be-returned device already includes customer upgrades, the replacement device may be upgraded before sending it to the customer. In this way the customer receives a replacement device with the same total set of upgrades as on the to-be-returned device. After the factory or third party contractor picks a suitable replacement device for a to-be-returned device, the feature license system is notified in step 1015 that an upgrade license may need to be generated to upgrade the device as necessary. In step 1020 the feature license system determines if any customer upgrades have already been applied to the to-be-returned device. If there are none, the system takes no further action. If there are any upgrades, the system generates an upgrade license for the replacement device in step 1025 using the manufacturer's or the contractor's credits. The factory or contractor then applies the upgrade license to the device in step 1030 and ships the replacement device to the customer in step 1035. The factory or contractor then, in step 1038, transfers the replacement device from the factory or contractor to the customer in the feature license system.

While it is desirable for a customer to receive a replacement device with the same set of feature upgrades as are in the to-be-returned device, the device factory or contractor may not have the capability of performing the upgrade on behalf of the customer. In this case, personnel associated with the manufacture may use the feature license system to perform an advanced replacement of feature upgrades, and then separately send the upgrade license to the customer in step 1040. The customer, in turn, will apply the upgrade keys in step 1045 to the replacement device after it is received.

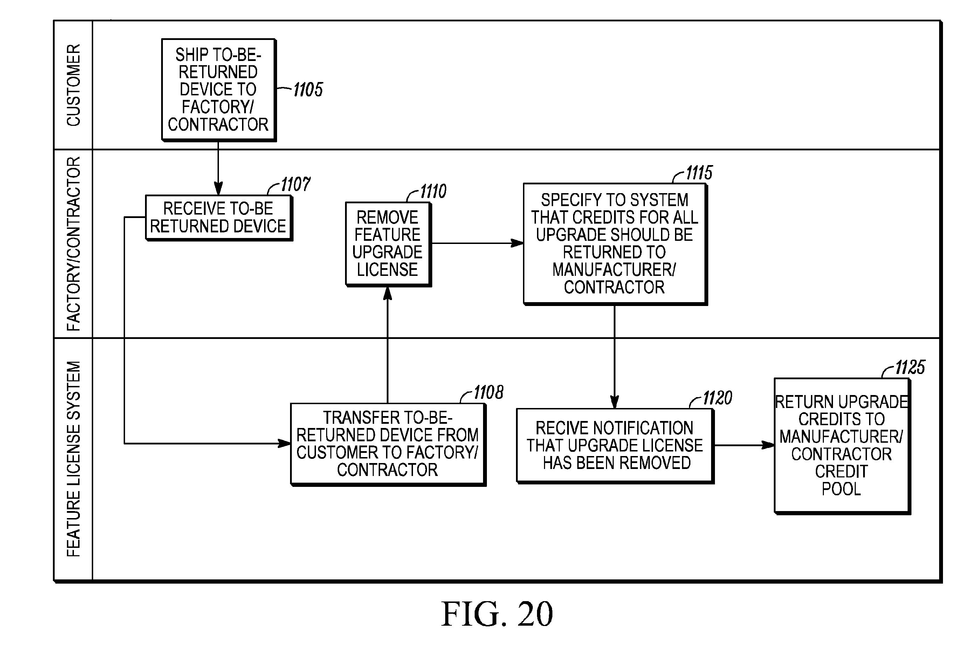

An example of the process performed by the feature license system when a customer returns a device for which an advance replacement has been provided without loaning any credits is described with reference to FIG. 20. When the factory or a credit stocking third-party contractor receives a returned device in step 1107 from a customer for which a replacement device has already been sent, the factory/contractor first transfers the returned device from the customer to the manufacturer or contractor in the feature license system in step 1108. The factory or contractor then removes any upgrade license from the device in step 1110 and, in step 1115, specifies (e.g., by setting the appropriate flags) in the feature license system that all the credits used for both factory and customer upgrades should be returned to the manufacturer. The system receives notification of the license removals in step 1120 and the credits are returned to the manufacturer credit pool in step 1125.

A variation to the above process described in reference to FIG. 20 is performed when the third-party contractor is a non-credit stocking contractor. In this case, no action is taken when the contractor receives the to-be-returned device. Instead, actions are taken when the contractor passes the returned device to the factory. When the factory receives from the contractor the device involved in an advanced replacement, the factory uses the feature license system to transfer the device from the customer to the manufacturer. The factory then removes the feature upgrade license on the device and indicates to the feature license system that all the credits used for the license should be returned to the manufacturer. The feature license system, upon receiving the license removal notification, returns all the credits used for the removed license to the manufacturer's credit pool.

### SUPPORT FOR DIFFERENT LEVELS OF PRODUCT CAPABILITY AND LICENSE PORTABILITY

The system has the flexibility to support products with different capabilities and different license portability requirements. In general, for a product to support feature licensing, there are two basic security requirements:

1. Each device needs a unique secure device ID that is not easily modifiable or falsifiable by an end-user. This ID is included in a feature license to bind it to a device.

2. Each device needs a secure storage unit that can be used by the feature licensing component on the device. "Secure" means that the storage unit is not easily modifiable by an end-user. The licensing component will store the license state in this storage area. The license state typically refers to the license itself. However, at a minimum, the license state may simply be the global license sequence number of the license that is currently loaded. Storage of the license state prevents roll-back of the current license to a previous license which may entitle the device to more features than the current license.

If a product does not meet either or both of these requirements, alternative mechanisms can be used. Such mechanisms include external security devices that have a secure ID and a secure storage, and may have a private key embedded in them, for instance, smart cards and USB security tokens (i.e. crypto tokens) or other types of external security tokens. When connected to a device that needs a feature license, such an external security device provides the necessary secure ID to bind the feature license as well as the necessary secure storage to store the license state.

Even if a product meets both security requirements, the product may not have enough computing power or necessary data (such as a private key) to perform all computations related to feature licensing, and thus may still need an external security device to perform those computations. In addition, a product that meets both security requirements may require its feature licenses to be portable from one device to another. A feature license bound to the ID of an external security device can provide this kind of license portability.

For purposes of illustration the following discussion will assume that crypto tokens are being used.

Products can be classified into four categories according to which of the two requirements they meet. The four cases will be discussed in turn.

In the first case, the product has both a secure device ID and a secure storage. If a crypto token is used with a device for license binding, license storage, as well as license revocation confirmation signing (by the cryptographic key embedded in the token), the system may support either "portable" or "non-portable" token scenarios. A portable token has a license that is bound only to the token's ID but not the device's own ID (as the secondary device ID in a license), and allows end-users to use the token in any device of the product. A non-portable token has a license that is bound to both the token's ID and the device's own ID, and thus can only be used for the device. If, on the other hand, a crypto token is not used, and each product device has a device-specific private key, this private key may be used to sign a license revocation confirmation. This provides better security but requires device personalization to load the device-specific private key and a certificate onto the device. If a crypto token is not used, and each product device does not have a device-specific private key, then the license revocation confirmation can be signed with a derived symmetric key. This provides lower security but does not require device personalization.

In the second case, the product has a secure device ID but not a secure storage. If in this case a crypto token is used the license file can be stored on the token and the license revocation confirmation is signed with the private key on the token. Similar to the first case, either "portable" or "non-portable" token scenarios can be supported in the second case. If on the other hand, a crypto token is not used, then as in the first case, either a device-specific private key or a derived symmetric key can be used to sign a license revocation confirmation, but with lower security than in the first case where a crypto token is not used.

In the third case, the product has secure storage but not a secure device ID. If this product supports device personalization, a unique device ID can be loaded into the secure storage, converting this case into the first case. If device personalization is not available and a crypto token is used, the license file can be stored on the token and the token's own ID can be used as the secure device ID for license binding, in which case the token is inherently portable. In addition, confirmation of a license revocation can be signed with the private key on the token. On the other hand, if device personalization is not available and a crypto token is not used, then the confirmation of a license revocation can be signed with a derived symmetric key.

In the fourth case, the product has neither a secure storage nor a secure device ID. If in this case a crypto token is used, the license file can be stored on the token and the token's own ID can be used as the secure device ID for license binding, in which case the token is inherently portable. In addition, confirmation of a license revocation can be signed with the private key on the token. If crypto token is not used and each product device does not have a device-specific private key, then the license revocation confirmation can be signed with a derived symmetric key.

### EXAMPLE

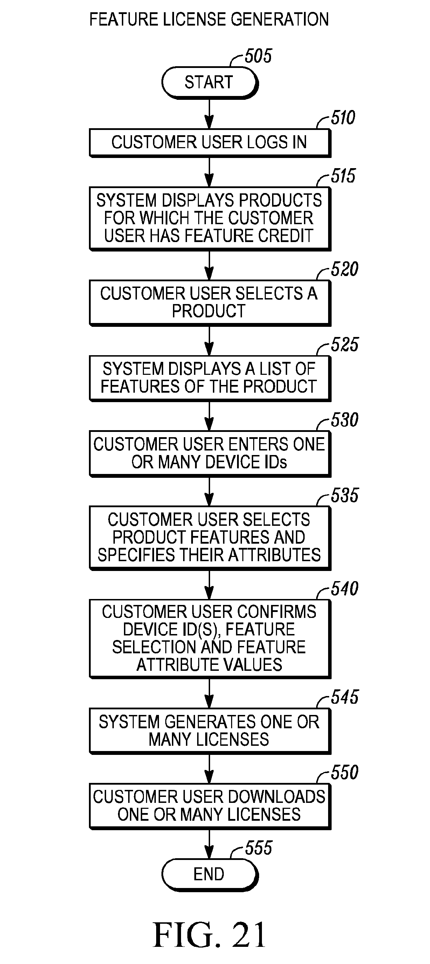

FIG. 21 is a flowchart showing one example of how a customer can provision one or more devices with feature licenses using the feature license system described above. The method begins in step 505 and continues to step 510 where customer remotely logs into the system using a web browser interface. The system verifies the customer's credentials through a user directory associated with the customer's organization. Once the customer has been properly authenticated the system displays or otherwise presents to the customer in step 515 a list of products for which this customer has feature credits available. In response, the customer selects a product to which the device(s) being provisioned belongs in step 520. The system then displays for the user in step 525 a list of features available for the selected product. Also presented may be the number of feature credits available for that product, and any feature qualifiers or other attributes that may be associated with the features. Next, in step 530, the customer enters one more device IDs to identify the devices to be provisioned and in step 535 selects the desired features from the available features and specifies the value of any attributes of the selected features. The system presents the customer with a summary of the requested items and the customer confirms the selections in step 540. The system then generates the licenses in step 545 and makes them available so that the customer can download them in step 550, either in a single file or in separate files. The licenses that are generated all contain the same set of features and attribute values, which correspond to those selected by the customer.

As used in this application, the terms "component," "module," "system," "apparatus," "interface," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable storage media can include but are not limited to magnetic storage devices (e.g., hard disk, floppy disk, magnetic strips ...), optical disks (e.g., compact disk (CD), digital versatile disk (DVD) ...), smart cards, and flash memory devices (e.g., card, stick, key drive...). Of course, those skilled in the art will recognize many modifications may be made to this configuration without departing from the scope or spirit of the claimed subject matter.

## Claims

1. A system to provision devices with upgraded feature licenses that enable specified features to be upgraded in the devices, said features being licensed from third party suppliers of at least one component used in the devices, comprising:
a feature definition module configured to store product feature information associated with different products available from a plurality of different manufacturers, wherein at least two of the different products belong to different product lines and support different sets of features;
a feature license management module configured to generate, update, upgrade and revoke feature licenses associated with the different products, including upgraded features licenses associated with the components available from the third party suppliers, wherein the feature licenses that are generated all have a common format;
a feature credit management module configured to monitor and account for feature credits available to manufacturer and customer organization units in manufacturer and customer feature credit pools, respectively, said feature credits representing a quantity of a feature that is available to the respective manufacturer or customer organization unit; and
a user management module configured to authenticate users of the system; and
a user interface accessible over a communications network through which authenticated users can request and receive feature licenses, including the upgraded feature licenses.

2. The system of claim 1 wherein the user interface is further configured to create manufacturer credit records specifying a number of features credits available to respective manufacturers for upgraded feature licenses associated with the components available from the third party suppliers.

3. The system of claim 2 wherein the feature credit module is further configured to release feature credits specified in the manufacturer credit records into the respective manufacturer credit pools upon authorization provided by authenticated users through the user interface.

4. The system of claim 1 wherein the feature credit module is further configured to deduct credits from a manufacturer credit pool associated with a first manufacturer when the feature license management module is used by the first manufacturer to generate a feature license upgrading features associated with the components available from the third party suppliers and used in one or more devices available from the first manufacturer.

5. The system of claim 4 wherein the feature credit module is further configured to transfer feature credits from the manufacturer credit pool of the first manufacturer to a customer credit pool when the customer purchases feature credits.

6. The system of claim 4 wherein the feature credit module is further configured to cause an authorized user of the first manufacturer to be notified when a number of feature credits available in the manufacturer credit pool associated with the first manufacturer falls below a threshold level.

7. The system of claim 1 wherein the feature credit module is further configured to receive a credit return message provided by an authorized user through the user interface, said message indicating that a third party supplier-provided component that is being returned has feature upgrades and that credits used for the feature upgrade are to be returned to one of or both of the manufacturer and the customer organization unit of the device in which the component being returned is located.

8. The system of claim 1 wherein the feature license management module is further configured to generate an upgraded feature license for a replacement device to be provided to a customer in advance of the return of a device by the customer to be replaced and the feature credit management module is further configured to use feature credits loaned from a credit pool associated with the manufacturer of the device being returned or a third party contractor, said loaned feature credits being used to obtain the upgraded feature license.

9. The system of claim 8 wherein the feature credit management module is further configured to return the loaned feature credits to the credit pool from which they were loaned when an authorized user indicates that the device being returned is received by a designated party associated with the manufacturer or the third party contractor and the upgraded feature licenses have been removed.

10. The system of claim 9 wherein the device is returned to the third party contractor or the manufacturer and the upgraded feature license of the device being returned contains customer upgrades, the feature credit management module being further configured to transfer feature credits used for the upgraded feature license of the device being returned from the customer credit pool to the third party contractor credit pool or the manufacturer credit pool.

11. The system of claim 10 wherein the feature license management module is further configured to associate a feature license for the upgraded feature license that have been removed with the third party contractor or the manufacturer instead of the customer organization unit.

12. A method for provisioning devices with upgraded feature licenses that enable specified upgraded features in the devices, comprising:
authenticating a first customer as an authenticated user;
receiving from a first customer over a communications network a first request to establish a credit record for a specified number of upgraded feature licenses, said upgraded feature licenses being obtainable from a third party supplier and associated with components available from the third party supplier, said credit record including feature credits to be made available to the first customer to obtain the upgraded feature licenses from the third party supplier;
receiving a second request from the first customer to release the feature credits in the credit record to a credit pool associated with the first customer so that the feature credits are available to the first customer to obtain the upgraded feature licenses; and
generating the upgraded feature licenses and debiting the credit pool associated with the first customer for a number of credits needed to obtain the upgraded feature licenses.

13. The method of claim 12 wherein the first customer is a first manufacturer of the devices being provisioned with the upgraded feature licenses.

14. The method of claim 13 further comprising transferring the feature credits from the credit pool of the first manufacturer to a second customer credit pool associated with a second customer of the first manufacturer when the customer purchases credits for features associated with the components available from the third party supplier and used in one or more devices available from the first manufacturer.

15. The method of claim 13 further comprising causing an authorized user of the first manufacturer to be notified when a number of feature credits available in the credit pool associated with the first manufacturer falls below a threshold level.

16. The method of claim 13 further comprising receiving a credit return message provided by an authorized user through the user interface, said message indicating that a third party supplier-provided component that is being returned has feature upgrades and that credits used for the feature upgrade are to be returned to one or both of the first manufacturer and a second customer of the first manufacturer, or a third party contractor.

17. The method of claim 16 further comprising generating an upgraded feature license for a replacement device to be provided to the second customer of the first manufacturer in advance of an exchange of a device being returned by the second customer.

18. The method of claim 16 further comprising using feature credits loaned from a credit pool associated with the first manufacturer of the device being returned or the third party contractor, said loaned feature credits being used to obtain the upgraded feature license.

19. The method of claim 18 further comprising returning the loaned feature credits to the credit pool from which they were loaned when the device being returned is received by a designated party associated with the manufacturer or the third party contractor.

20. The method of claim 16 further comprising using feature credits of the first manufacturer of the device being returned or the third party contractor to obtain the upgraded feature license.

21. The method of claim 12 further comprising receiving a notification from an authorized user that one or more upgrade feature license are being returned which have been removed from the device being returned and, in response to the notification, returning feature credits used to obtain the upgraded feature licenses that have been removed to the manufacturer of the device being returned or the third party contractor.

22. The method of claim 21 further comprising returning the device to the third party contractor and transferring feature credits for the one or more removed upgrade feature licenses from the third party contractor credit pool to the credit pool of the second customer.

23. The method of claim 12 further comprising associating the upgrade feature license that has been removed with the third party credit pool instead of the credit pool of the second customer.

24. The system of claim 1 wherein the feature license module is further configured to convert feature licenses provided by a third party supplier into credits owned by a first manufacturer for features associated with components available from a third party supplier and used in one or more devices available from the first manufacturer.

25. The system of claim 24 wherein the feature credit module is further configured to deduct credits from a manufacturer credit pool associated with the first manufacturer when a feature license purchased by the first manufacturer is provided by the third party supplier and installed on one or more devices available from the first manufacturer.
